# EUROPÄISCHE PATENTSCHRIFT

(11) **EP 2 762 358 B1**
(45) Veröffentlichungstag und Bekanntmachung des Hinweises auf die Patenterteilung: **22.05.2019**
(21) Anmeldenummer: 14150927.3
(22) Anmeldetag: 13.01.2014
(51) Int. Cl.: B60Q 1/068, B60Q 1/076

(54) **Einstellsystem für einen Fahrzeug-Scheinwerfer**
Adjusting system for a vehicle headlamp
Système de réglage de phare de véhicule

(30) Priorität: 01.02.2013 AT 500832013
(43) Veröffentlichungstag der Anmeldung: 06.08.2014
(73) Patentinhaber: ZKW Group GmbH, 3250 Wieselburg (AT)
(72) Erfinder: Hauer, Clemens, 3261 Steinakirchen am Forst (AT); Baminger, Peter, 3241 Kirnberg (AT)
(74) Vertreter: Patentanwaltskanzlei Matschnig & Forsthuber OG

(56) Entgegenhaltungen:
- EP-A2- 1 157 887
- DE-A1- 10 152 931

## Beschreibung

Die Erfindung betrifft ein Einstellsystem für einen Fahrzeug-Scheinwerfer zum Einstellen eines optisch relevanten Bauteiles des Fahrzeug-Scheinwerfers, bei welchem Einstellsystem der optisch relevante Bauteil an
a) einem Fix-Lagerpunkt um eine erste und eine zweite Achse, vorzugsweise eine vertikale und eine horizontale Achse verschwenkbar ist, wobei die erste und die zweite Achse normal zueinander stehen,
b) das Einstellsystem eine erste Verstelleinrichtung umfasst, mittels welcher der optisch relevante Bauteil um die erste Achse verschwenkbar ist, wobei die erste Verstelleinrichtung an einem zweiten Verstell-Lagerpunkt angreift, und wobei
c) das Einstellsystem eine zweite Verstelleinrichtung umfasst, mittels welcher der optisch relevante Bauteil um die zweite Achse verschwenkbar ist, wobei die zweite Verstelleinrichtung an einem ersten Verstell-Lagerpunkt angreift, und wobei
   der Fix-Lagerpunkt und der zweite Verstell-Lagerpunkt die zweite Achse bilden.

Weiters betrifft die Erfindung einen Fahrzeugscheinwerfer mit zumindest einem optisch relevanten Bauteil sowie mit zumindest einem Einstellsystem zum Einstellen des zumindest einen optisch relevanten Bauteils.

Beispiele für solche optisch relevante Bauteile sind Blenden(anordnungen), Lichtquellen, Reflektoren, Linsen, ganze Lichtmodule bzw. Baugruppen, etc....

Fahrzeug-Scheinwerfer dienen sowohl zur Sichtbarmachung der Fahrzeugumgebung sowie der Fahrzeuge selbst. Darüber hinaus sind Fahrzeug-Scheinwerfer ein wesentlicher Bestandteil des Fahrzeugdesigns, wodurch der Wiedererkennungswert einer Marke oder eines Modells gesteigert werden kann. Moderne Fahrzeugscheinwerfer verfügen über Verstelleinrichtungen, die beispielsweise eine manuelle werksseitige Optimierung eines auf eine Straße projizierten Lichtbildes ermöglichen. Des Weiteren verfügen Fahrzeug-Scheinwerfer häufig zusätzlich über eine Leuchtweitenregulierung, die elektromotorisch gesteuert ist und beispielsweise durch den Fahrzeuglenker in einfacher Weise bedient werden, oder automatisch erfolgen kann. Der optisch relevante Bauteil ist dabei zumeist um zwei zueinander normal orientierte Achsen schwenkbar, womit beispielsweise die Leuchtweite sowie eine "Links-Rechts-Ausrichtung" des optisch relevanten Bauteiles reguliert werden kann. Die beiden Achsen verlaufen üblicherweise durch einen gemeinsamen Fix-Lagerpunkt und jeweils einen Verstell-Lagerpunkt.

Ein Fahrzeug-Scheinwerfer mit einer solchen Achsenanordnung ist beispielsweise aus der DE 10152931 A1 bekannt geworden. Ein durch die drei Lagerpunkte gebildetes Dreieck liegt dabei in einer vertikalen Ebene, womit eine Schwenkbewegung um die horizontale Achse mit einer im Wesentlichen horizontalen an einem Verstell-Lagerpunkt angreifenden Bewegung in Zusammenhang steht. Damit einhergehende konstruktive Anforderungen an die Anordnung von Stellelementen bedingen einen hohen Platzbedarf, und/oder erhöhen den Fertigungs- und Materialaufwand eines Scheinwerfergehäuses. EP 1.157.887 offenbart ein Einstellsystem für einen Fahrzeug-Scheinwerfer gemäß dem Oberbegriff des Anspruchs 1.

Eine Aufgabe der Erfindung ist es, ein Einstellsystem für einen Fahrzeug-Scheinwerfer zum Einstellen eines optisch relevanten Bauteiles des Fahrzeug-Scheinwerfers zu schaffen, welches im Gegensatz zu dem Stand der Technik eine kompakte und Platz sparende Bauweise des Fahrzeug-Scheinwerfers mit einem Verstelldreieck zulässt.

Diese Aufgabe wird mit einem Einstellsystem gemäß Anspruch 1 gelöst.

Gemäß der Erfindung ist vorgesehen, dass die zweite Verstelleinrichtung ein manuell bedienbares erstes Stellmittel umfasst und dass ein elektromotorisches zweites Stellmittel vorgesehen ist, wobei das elektromotorische zweite Stellmittel mit dem optisch relevanten Bauteil zum Verschwenken um die zweite Achse in Eingriff steht. Ein Verschwenken um die zweite Achse kann hierbei durch einen Benutzer aus dem Inneren des Wagens über Steuersignale oder eine automatische Leuchtweitenregulierung, wie sie z.B. bei Scheinwerfern mit Xenonlampen vorgesehen ist, erfolgen. Bei der zweiten Achse handelt es sich vorzugsweise um eine horizontale Achse, wodurch das zweite Stellmittel zur Regulierung der Leuchtweite des Scheinwerfers verwendet werden kann.

In einer besonders einfachen und robusten Weiterbildung der Erfindung stimmt dabei eine Stellrichtung des ersten Stellmittels mit einer Stellrichtung des zweiten Stellmittels im Wesentlichen überein.

Gemäß einer ersten Variante der Erfindung ist der Fix-Lagerpunkt an einer von einer Gehäuserückseite eines Scheinwerfergehäuses abstehenden Strebe vorgesehen, wodurch der Fix-Lagerpunkt besonders einfach ausgebildet werden kann. Die Strebe kann mit dem Scheinwerfergehäuse einstückig ausgeführt sein. Das Scheinwerfergehäuse umfasst dabei den optisch relevanten Bauteil, die erste und die zweite Verstelleinrichtung sowie das zweite Stellmittel.

Gemäß der Erfindung ist ein dem zweiten Stellmittel zugeordnetes und durch dieses translatorisch in eine Stellrichtung bewegbares Stellelement vorgesehen, wobei das Stellelement mit einem um einen dritten Punkt schwenkbaren Arm an einem ersten Armabschnitt in Eingriff steht und ein zweiter Armabschnitt des Armes mit dem optisch relevanten Bauteil oder mit einem den optisch relevanten Bauteil tragenden Rahmen zum Verschwenken um die zweite Achse in Eingriff steht. Das zweite Stellmittel kann daher mitsamt dem zugeordneten Stellelement weitgehend unabhängig vom ersten Verstell-Lagerpunkt platziert werden, indem die translatorische Bewegung des Stellelements über den zweiten Armabschnitt auf den optisch relevanten Bauteil oder den Rahmen übertragen wird.

In einer zusätzlichen Weiterbildung der ersten Variante ist der Arm L-förmig ausgebildet, wobei sich der erste und der zweite Armabschnitt innerhalb gegenüberliegender Endbereiche des Armes befinden. Die Bewegung des Stellelements kann dadurch besonders effizient auf den optisch relevanten Bauteil bzw. den Rahmen übertragen werden. Die Stellrichtung des zweiten Stellmittels bildet dabei vorteilhafterweise eine Tangente auf eine Kreisbahn, deren Mittelpunkt im Fix-Lagerpunkt liegt und deren Durchmesser dem Abstand zwischen Fix-Lagerpunkt und dem ersten Verstell-Lagerpunkt entspricht.

Gemäß einer zweiten Variante der Erfindung ist das zweite Stellmittel zur Einstellung durch das erste Stellmittel bewegbar an einer an einer Gehäuserückseite befindlichen ersten Führung angebracht. Eine dauerhafte Verstellung des zweiten Stellmittels ist somit besonders einfach möglich, ohne den Verstellbereich des zweiten Stellmittels zu beeinflussen.

In einer dritten Variante ist der Fix-Lagerpunkt an einer von einer Gehäuseoberseite eines Scheinwerfergehäuses zu einer Gehäuseunterseite des Scheinwerfergehäuses erstreckenden Strebe vorgesehen. In dieser Variante entfällt eine Verbindung der Strebe mit der Gehäuserückseite, womit der Raum zwischen der Gehäuserückseite und der Strebe nützbar wird. So kann beispielsweise das zweite Stellmittel zwischen der Strebe und der Gehäuserückseite angeordnet sein.

In einer Weiterbildung der Varianten zwei und drei ist ein dem zweiten Stellmittel zugeordnetes und durch dieses translatorisch in eine Stellrichtung bewegbares Stellelement vorgesehen, wobei das Stellelement mit einem an einer zweiten Führung bewegbar geführten Übertragungselement in Eingriff steht, wobei die zweite Führung mit dem zweiten Stellmittel ortsfest verbunden ist, wobei der optisch relevante Bauteil in einem Rahmen aufgenommen ist, und der optische relevante Bauteil gemeinsam mit dem Rahmen um die erste und die zweite Achse verschwenkbar ist, wobei ein von dem Rahmen abstehender Endbereich ein Verbindungsstück aufweist, welches zumindest teilweise in einem Öffnungsbereich des Übertragungselements aufgenommen ist. Der Aufbau der Einstelleinrichtung ist somit besonders robust und Platz sparend.

Gemäß einer vierten Variante der Erfindung weist die Strebe ein Aufhängungselement auf, welches zur gelenkigen Aufnahme eines Haltearms eingerichtet ist, wobei das zweite Stellmittel mit dem Haltearm ortsfest verbunden ist, wobei das erste Stellmittel mit dem Haltearm zum Verschwenken des Haltearms in Bezug auf das Aufhängungselement in Eingriff steht. Die Position des zweiten Stellmittels kann somit mit Hilfe des ersten Stellmittels in einfacher Weise verändert werden.

In einer Weiterbildung der vierten Variante ist das erste Stellmittel bewegbar an einer an der Strebe befindlichen ersten Führung angebracht, wodurch der Raum zwischen der Strebe und der Gehäuserückseite besonders effizient genutzt wird und der Fahrzeug-Scheinwerfer besonders kompakt aufgebaut werden kann.

Um einen kostengünstig herstellbaren und robusten Lagermechanismus am Fix-Lagerpunkt zu realisieren, ist in einer vorteilhaften Ausführungsform der Erfindung vorgesehen, dass zum Schwenken um die erste und zweite Achse an dem Fix-Lagerpunkt eine zweiteilige Klemmlagerschale vorgesehen ist.

Gemäß einer fünften Variante der Erfindung ist eine sich von einer Gehäuseoberseite zu einer Gehäuseunterseite erstreckende Strebe eines Scheinwerfergehäuses vorgesehen, wobei das dem ersten Stellmittel zugeordnete und durch dieses translatorisch bewegbare zweites Stellmittel an der Strebe geführt ist, und wobei das zweite Stellmittel mit dem ersten Stellmittel ortsfest verbunden ist. Eine dauerhafte Verstellung des zweiten Stellmittels durch das erste Stellelement ist somit besonders einfach möglich, ohne den Verstellbereich des zweiten Stellmittels zu beeinflussen.

Dabei ist es besonders vorteilhaft, wenn zum Schwenken um die zweite Achse eine zumindest an der Strebe gelagerte Drehwelle vorgesehen ist. Die Drehwelle kann zusätzlich im Bereich des zweiten Verstell-Lagerpunktes gelagert sein.

Um eine besonders einfache Fertigung sowie einen raschen Zusammenbau des erfindungsgemäßen Einstellsystems zu ermöglichen, ist die Drehwelle ein Bestandteil eines den optisch relevanten Bauteil tragenden Rahmens, wobei die Strebe eine Drehwellenaufnahme aufweist, die zum Einbringen der Drehwelle eine elastische schlitzartige Öffnung aufweist, die parallel zur zweiten Achse orientiert ist und deren Öffnungsgröße in einem unbelasteten Zustand geringer ist als ein Durchmesser der Drehwelle, und in einem belasteten Zustand zur Aufnahme der Drehwelle zumindest bis hin zu dem Drehwellendurchmesser erweiterbar ist. Die Öffnung weist dabei beispielsweise zu einer Vorderseite des Fahrzeug-Scheinwerfers.

Es sei an dieser Stelle erwähnt, dass sich sämtliche Positions- und Richtungsangaben, sofern nicht anders definiert, auf einen in einem Fahrzeug eingebauten Zustand eines Fahrzeug-Scheinwerfers beziehen. Der Begriff "Vorderseite" bedeutet daher die der Fahrtrichtung (bzw. der Lichtabstrahlrichtung) zugewandte Seite des Scheinwerfers.

In einer Weiterbildung der Erfindung ist es vorgesehen, dass der Rahmen zweiteilig ausgeführt ist, wobei die Drehwelle Bestandteil eines zweiten Rahmenteils ist, und ein erster Rahmenteil um die erste Achse um den zweiten Rahmenteil schwenkbar gelagert ist. Die Drehwelle kann dabei besonders nahe an den Schwerpunkt des optisch relevanten Bauteils bzw. des Rahmens heran gerückt werden, oder diesen sogar durchtreten, wodurch eine rasche und effiziente Verstellung des optisch relevanten Bauteils möglich ist.

Gemäß einer sechsten Variante der Erfindung ist die Drehwelle ein Bestandteil eines den optisch relevanten Bauteil tragenden Rahmens, wobei die Strebe eine Drehwellenaufnahme mit einer zylindrischen Öffnung aufweist, welche zylindrische Öffnung zur Aufnahme der Drehwelle durch ein Einschieben der Drehwelle in Achsrichtung der zweiten Achse eingerichtet ist. Dieser Aufbau ist besonders robust gegenüber äußeren mechanischen Einwirkungen wie beispielsweise Rüttelbelastungen.

Die Figuren zeigen Ausführungsformen.

Hierbei zeigt
Fig. 1 ein Scheinwerfergehäuse mit einem erfindungsgemäßen Einstellsystem in einer ersten Variante,
Fig. 2 das Einstellsystem gemäß Fig. 1 in einer perspektivischen Darstellung,
Fig. 3 eine Seitenansicht des Einstellsystems gemäß Fig. 1,
Fig. 4 ein Scheinwerfergehäuse mit einem Einstellsystem in einer zweiten Variante,
Fig. 5 das Einstellsystem gemäß Fig. 4 in einer perspektivischen Darstellung,
Fig. 6 eine Schnittansicht einer ersten und einer zweiten Führung des Einstellsystems gemäß Fig. 4,
Fig. 7 eine weitere Seitenansicht des Einstellsystems gemäß Fig. 4 mit teilweise geschnittenen Flächen,
Fig. 8 ein Scheinwerfergehäuse mit einem Einstellsystem in einer dritten Variante,
Fig. 9 das Einstellsystem gemäß Fig. 8 in einer perspektivischen Darstellung,
Fig. 10 eine Seitenansicht des Einstellsystems gemäß Fig. 8,
Fig. 11 ein Schweinwerfergehäuse mit einem Einstellsystem in einer vierten Variante,
Fig. 12 das Einstellsystem gemäß Fig. 11 in einer perspektivischen Darstellung,
Fig. 13 eine Seitenansicht des Einstellsystems gemäß Fig. 11,
Fig. 14 eine Schnittdarstellung des Einstellsystems gemäß Fig. 11,
Fig. 15 ein Scheinwerfergehäuse mit einem Einstellsystem in einer fünften Variante,

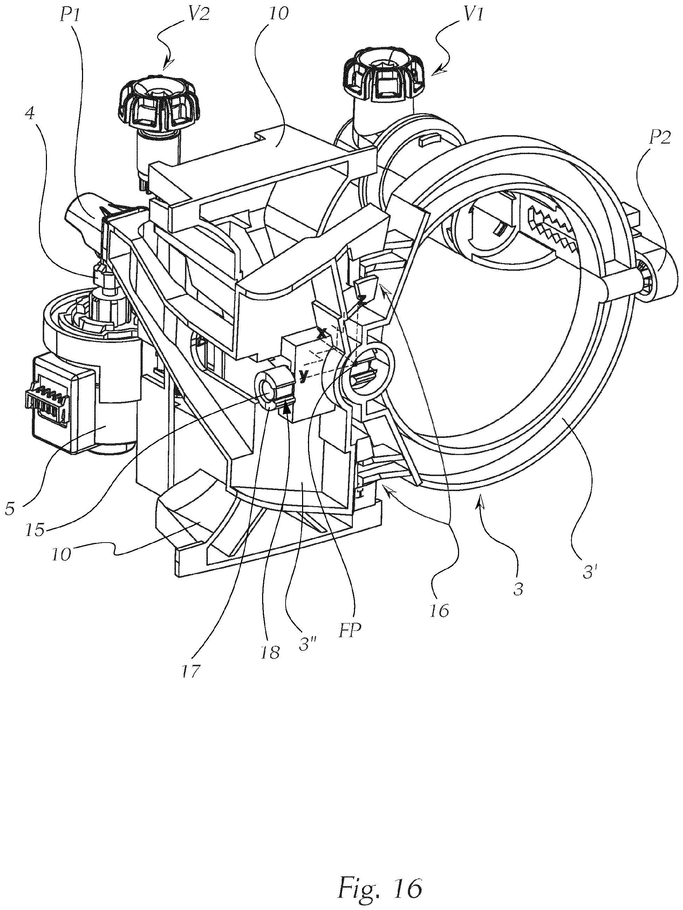

Fig. 16 das Einstellsystem gemäß Fig. 15 in einer perspektivischen Darstellung,
Fig. 17 eine Seitenansicht des Einstellsystems gemäß Fig. 15,
Fig. 18 eine Explosionsdarstellung des Einstellsystems gemäß Fig. 15,
Fig. 19 eine Schnittdarstellung einer Drehwelle des Einstellsystems gemäß Fig. 15,
Fig. 20 ein Scheinwerfergehäuse mit einem Einstellsystem in einer sechsten Variante,
Fig. 21 das Einstellsystem gemäß Fig. 20 in einer perspektivischen Darstellung,

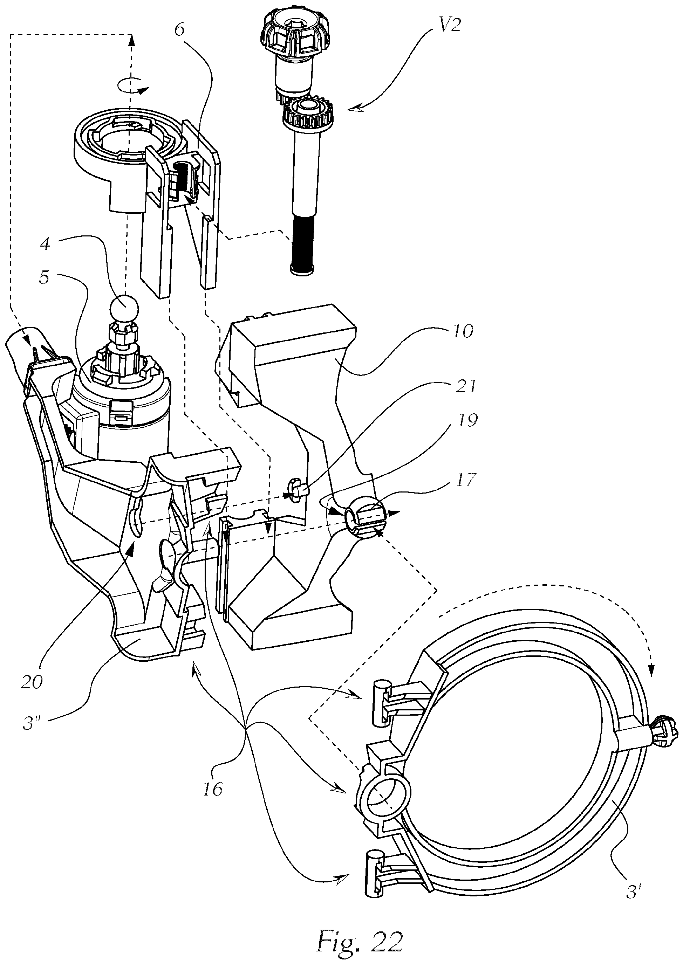

Fig. 22 eine Explosionsdarstellung des Einstellsystems gemäß Fig. 20 und

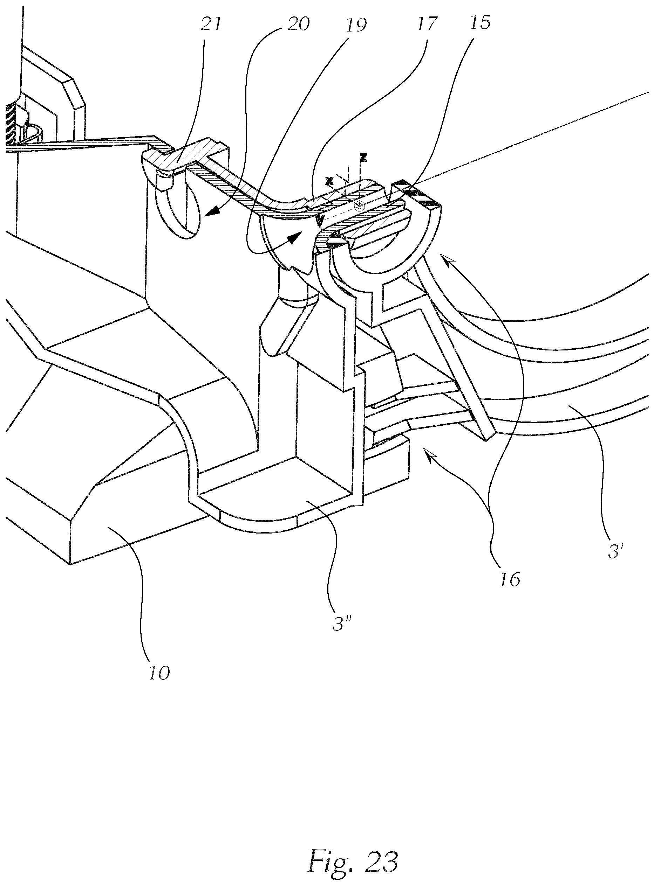

Fig. 23 eine Schnittdarstellung einer Drehwelle des Einstellsystems gemäß Fig. 20.

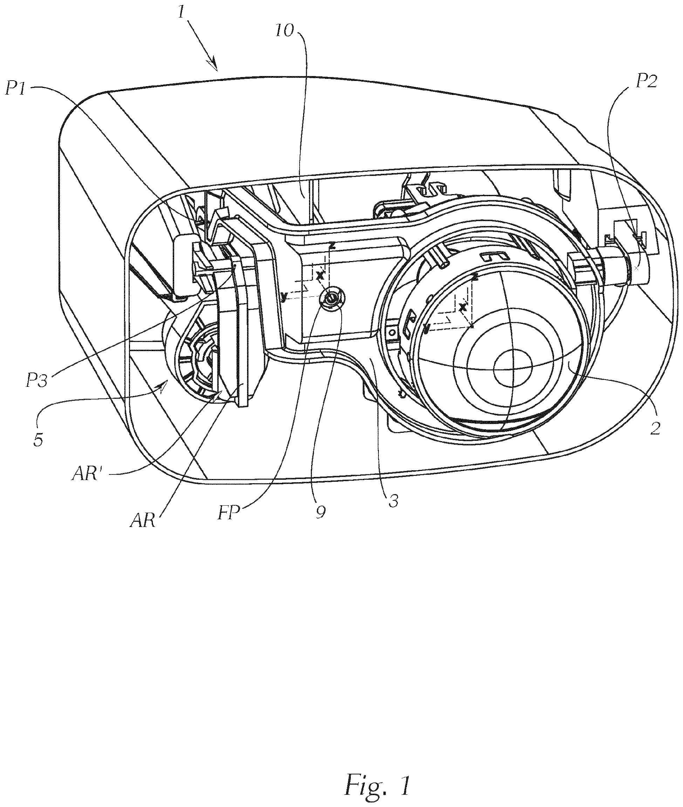

In Fig. 1 ist ein Scheinwerfergehäuse 1 dargestellt, in welchem eine erste Variante des erfindungsgemäßen Einstellsystems für einen Fahrzeug-Scheinwerfer zum Einstellen eines optisch relevanten Bauteils 2 angeordnet ist. Der optisch relevante Bauteil 2, bei dem es sich in dem gezeigten Beispiel um eine Linse, z.B. eine Projektionslinse eines Projektionsmoduls handelt, ist darin in einem Rahmen 3 gehalten, wobei dieser Rahmen 3 um eine erste sowie eine zweite Achse z und y schwenkbar gelagert ist. Die erste Achse z ist vertikal ausgerichtet, wodurch eine Schwenkbewegung um die erste Achse z eine Links-Rechts-Ausrichtung des optisch relevanten Bauteils 2 ermöglicht. Die zweite Achse y ist horizontal ausgerichtet und erstreckt sich zwischen einem Fixpunkt FP und einem zweiten Verstell-Lagerpunkt P2, wobei eine Schwenkbewegung des optisch relevanten Bauteils 2 um die zweite Achse y eine Regulierung der Leuchtweite des Scheinwerfers, beispielsweise eine dynamische Leuchtweitenregulierung ermöglicht. Eine dritte Achse x bildet gemeinsam mit den beiden Achsen y und z ein rechtswendig orientiertes kartesisches Koordinatensystem, wobei die positive Zählrichtung entlang der dritten Achse x entgegen der üblichen Fahrtrichtung eines Fahrzeugs gerichtet ist, in welchem der Scheinwerfer eingebaut ist.

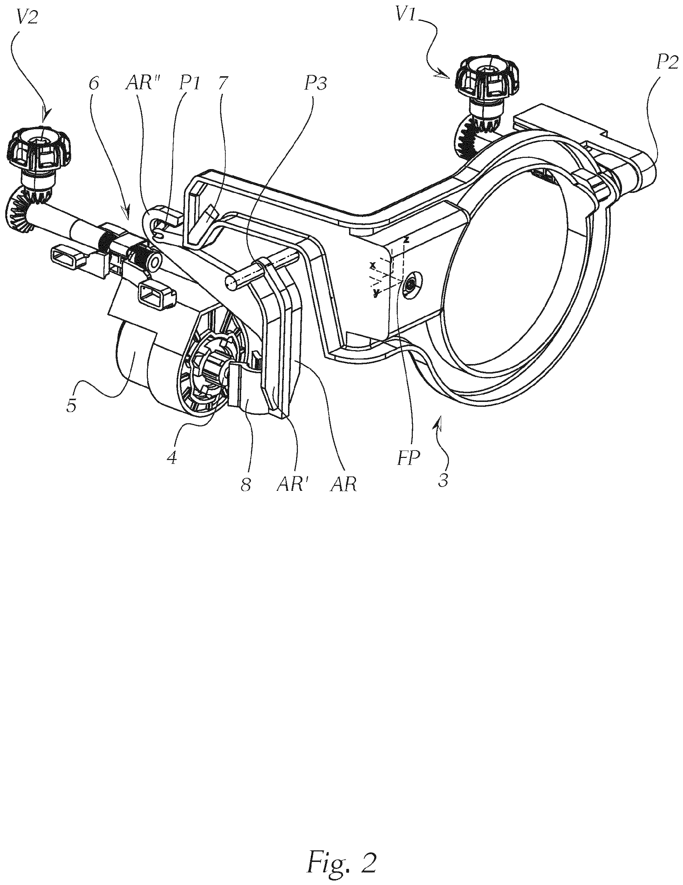

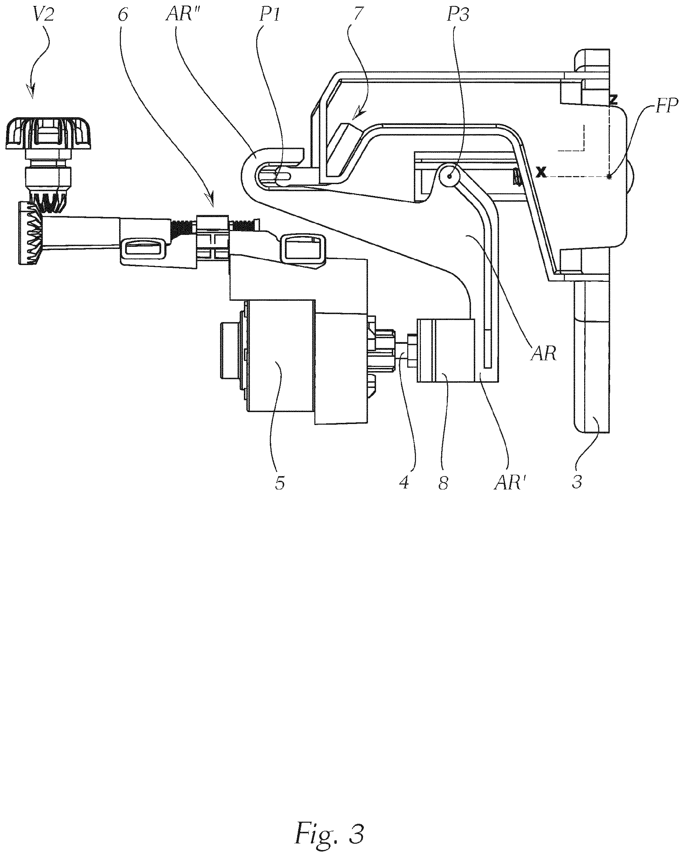

In einem abstehenden Endbereich des Rahmens 3 ist ein Verbindungsstück 7 (siehe Fig. 2) aufgenommen, das einen ersten Verstell-Lagerpunkt P1 aufweist. Dieser erste Verstell-Lagerpunkt P1 ist dazu eingerichtet die Schwenkbewegung um die zweite Achse y zu veranlassen, indem dieser entlang einer Kreisbahn um den Fixpunkt FP auf und ab wandern kann. Die Position des Verstell-Lagerpunktes P1 wird dabei einerseits von der Lage des zweiten Verstell-Lagerpunktes P2 und anderseits durch die Position eines Stellelements 4 festgelegt, wobei lediglich die Position des Stellelements 4 Einfluss auf die Ausrichtung des optisch relevanten Bauteils 2 in Bezug auf die zweite Achse y hat. Das Stellelement 4 ist einem zweiten Stellmittel 5 zugeordnet, wobei dieses zweite Stellmittel 5 wiederum durch ein einer zweiten Verstelleinrichtung V2 zugeordnetes erstes Stellmittel 6 ausgerichtet wird (siehe Fig. 2). Das Stellelement 4 ragt dabei in einen ersten Armabschnitt AR' eines um eine vierte Achse schwenkbar gelagerten Armes AR, wobei diese vierte Achse durch einen dritten Punkt P3 verläuft und in einer Neutralstellung parallel zur zweiten Achse y orientiert ist. Der schwenkbar gelagerte Arm AR weist weiters einen dem ersten Armabschnitt AR' gegenüberliegenden zweiten Armabschnitt AR" auf (siehe Fig. 2 und 3), der mit dem Rahmen 3 bzw. dem Verbindungsstück 7 an dessen Verstell-Lagerpunkt P1 in Eingriff steht. Der Arm AR ist vorzugsweise L-förmig ausgebildet, wobei sich der erste und der zweite Armabschnitt AR' und AR" an gegenüberliegenden Endbereichen des Armes AR befinden. Die Funktion der Stellmittel 5 und 6 wird in der Beschreibung der Fig. 2 und 3 näher erörtert.

Fig. 2 zeigt eine perspektivische Darstellung des in Fig. 1 gezeigten Einstellsystems. Das Verbindungsstück 7 ist zumindest teilweise innerhalb des zweiten Armabschnittes AR" von dem Arm AR umschlossen. Das Stellelement 4 ragt dabei in eine in dem ersten Armabschnitt AR' angeordnete Aufnahme 8, mit Hilfe derer eine translatorische Bewegung des Stellelements 4 in eine Drehbewegung des Armes AR um die vierte Achse gewandelt wird. Diese Drehbewegung verschiebt die Position des ersten Verstell-Lagerpunktes P1 in Bezug auf die zweite Achse y. Nachdem die vierte Achse eine Beabstandung in Bezug auf die zweite Achse y aufweist, stimmt die Schwenkbahn des zweiten Armabschnittes AR" nicht mit jener des abstehenden Endbereichs des Rahmens 3 überein. Um eine Klemmung des Verbindungsstückes 7 vorzubeugen, ist dieses daher mit einem gewissen Spiel, also einem gewissen Bewegungsfreiraum ausgestattet. Dies wird z.B. dadurch erreicht, dass das Verbindungsstück 7 an seinem dem zweiten Armabschnitt AR" zugewandten Ende eine zylindrische Erweiterung aufweist, die entlang deren Längsachse geschlitzt ist und deren Durchmesser die Dicke anderer Bereiche des Verbindungsstückes 7 übertrifft. Nachdem sich bei einem Schwenken des Rahmens 3 um die erste Achse z des Verbindungsstück 7 gemeinsam mit dem Rahmen 3 bewegt, ist das Verbindungsstück 7 so breit ausgeführt (dies betrifft im Wesentlichen die Erstreckung in Richtung der zweiten Achse y), dass auch bei einem Verschwenkvorgang um die erste Achse z zumindest ein Teilbereich des Verbindungsstückes 7 in den zweiten Armabschnitt AR" ragt.

Das Einstellsystem weist eine erste und eine zweite Verstelleinrichtung V1 und V2 auf, wobei die erste Verstelleinrichtung V1 an dem zweiten Verstell-Lagerpunkt P2 angreift, und die zweite Verstelleinrichtung V2 auf den ersten Verstell-Lagerpunkt P1 wirkt. Beide Verstelleinrichtungen V1 und V2 sind dabei über drehbare Justierelemente, insbesondere Justierschrauben einstellbar. So wirken die Justierelemente in der gezeigten Ausführungsform jeweils über ein Kegelgetriebe auf eine korrespondierende Welle, die zumindest an einem Abschnitt ein Gewinde aufweisen, entlang dessen sich jeweils ein Schubelement abhängig von der Drehrichtung der Welle translatorisch bewegt. Im Falle der ersten Verstelleinrichtung V1 steht dieses Schubelement in unmittelbaren Eingriff mit dem zweiten Verstell-Lagerpunkt P2, wodurch ein Verschwenken des optisch relevanten Bauteils 2 um die erste Achse z ermöglicht ist. Das Schubelement der zweiten Verstelleinrichtung V2 stellt das erste Stellmittel 6 dar und wirkt auf das zweite Stellmittel 5, indem das zweite Stellmittel 5 mit dem ersten Stellmittel 6 ortsfest verbunden ist und somit der Relativbewegung des ersten Stellmittels 6 in Bezug auf die zu dem Kegelgetriebe korrespondierende Welle folgt. Das zweite Stellmittel 5 verfügt über einen Elektromotor, der eine Linearbewegung des Stellelements 4 ermöglicht. Mit Hilfe des Elektromotors kann beispielsweise eine dynamische Leuchtweitenregulierung realisiert sein. Nachdem der Stellbereich des zweiten Stellmittels 5 die möglichen Relativpositionen des Stellelements 4 in Bezug auf zweite Stellmittel 5 festlegt, ist eine Absolutverstellung des zweiten Stellmittels 5 durch das erste Stellmittel 6 für den Stellbereich des zweiten Stellmittels 5 ohne Bedeutung. Durch die zweite Verstelleinrichtung V2 kann daher der Position des optisch relevanten Bauteils 2 in einfacher Weise eine Art "offset" hinzugefügt werden. Dabei ist es besonders vorteilhaft, dass in der gezeigten Ausführungsform die Verstellrichtung des zweiten Stellmittels 4 bzw. des Stellelements 5 mit der Verstellrichtung des ersten Stellmittels 6 bzw. des Schubelements, also der Schubrichtung, übereinstimmt. Die mechanische Ausgestaltung der Verstelleinrichtungen V1 und V2 kann in beliebiger dem Fachmann bekannter Weise von den dargestellten Varianten abweichen. Generell sind sämtliche gezeigten Bauteile und Varianten durch den Fachmann abwandelbar und nicht als einschränkend zu betrachten.

Der Fixpunkt ist durch ein Klemmlager 9 gebildet, das an einer in Fig. 1 dargestellten Strebe 10 festgehalten ist, wobei sich die Strebe 10 von einer Gehäuserückseite in Richtung Gehäusevorderseite erstreckt. Das Klemmlager 9 weist in der gezeigten Ausführungsform einen Kugelkopf auf, der in eine schalenförmige Aufnahme des Rahmens 3 ragt, wobei ein an dem Kugelkopf angebrachte Welle die schalenförmige Aufnahme des Rahmens 3 durchdringt und in die Strebe 10 ragt. Die an dem Kugelkopf angebrachte Welle weist dabei ein Gewinde auf, mit Hilfe dessen eine einfache und sichere Verbindung des Kugelkopfes mit der Strebe ermöglicht und eine effiziente Lagerung des Rahmens 3 gewährleistet ist.

Fig. 3 zeigt eine Seitenansicht des Einstellsystems gemäß Fig. 1 sowie Fig. 2. Hierin ist die Anordnung der Stellmittel 5 und 6 besonders gut erkennbar.

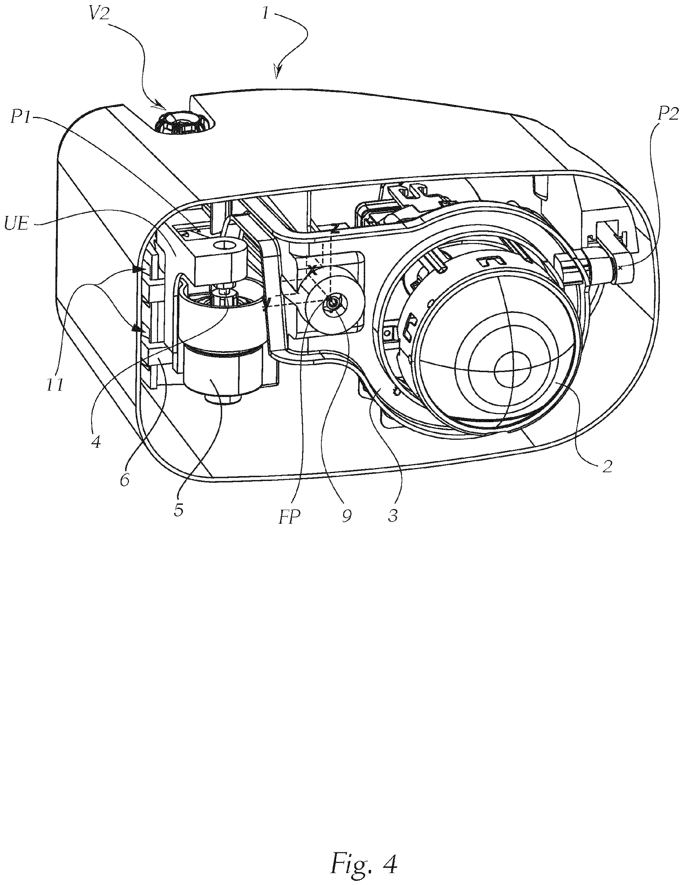

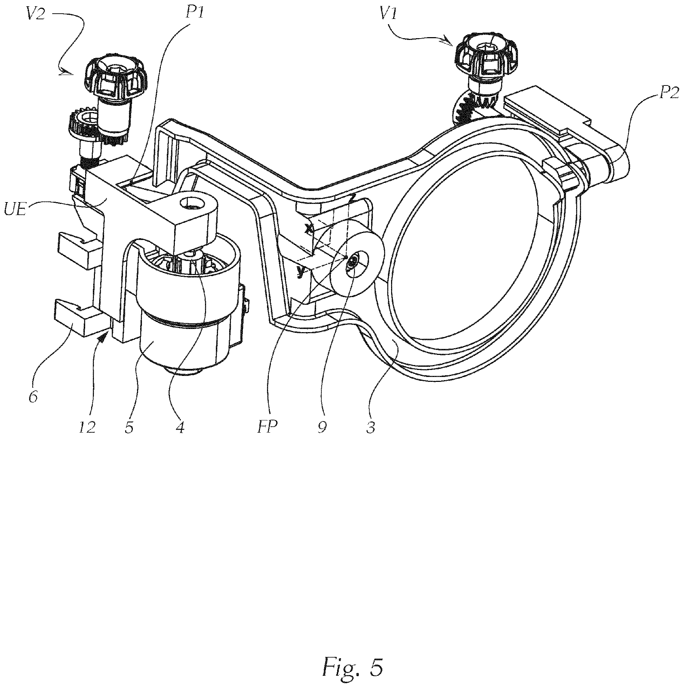

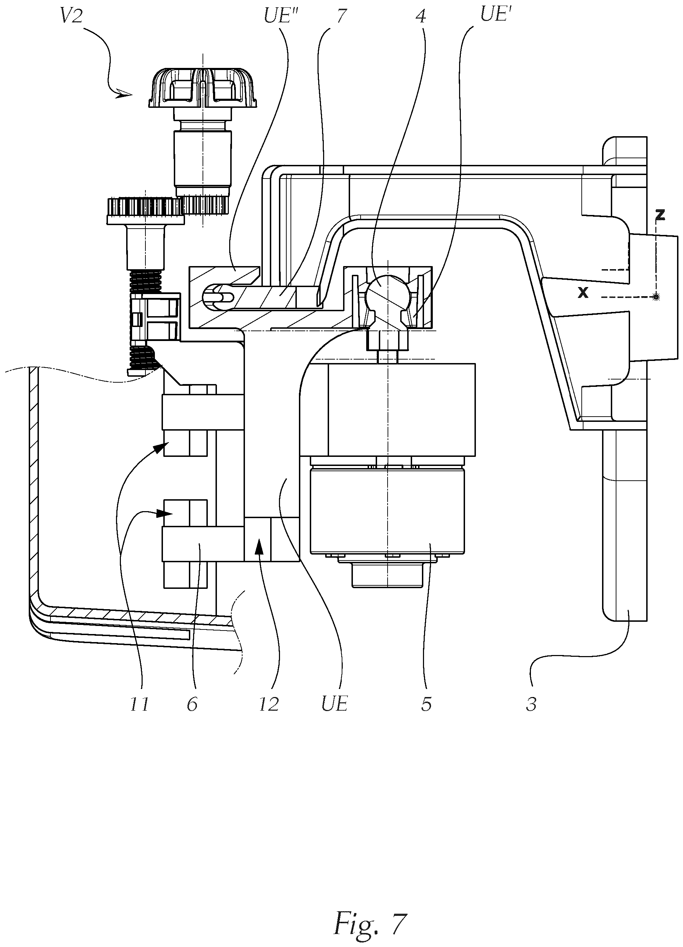

In Fig. 4 ist eine zweite Variante gezeigt, die sich von der ersten Variante der Erfindung in folgend beschriebener Weise unterscheidet (die Bezugszeichen werden analog zu den anderen beschriebenen Varianten verwendet). Das zweite Stellmittel 5 ist zur Einstellung durch das erste Stellmittel 6 bewegbar an einer an der Gehäuserückseite befindlichen ersten Führung 11 angebracht. Diese Führung 11 ist in der gezeigten Ausführungsform ebenso wie die Stellrichtung des ersten und des zweiten Stellmittels 5 und 6 vertikal ausgerichtet. Diese Komponenten müssen aber nicht zwingend vertikal ausgerichtet sein. Wesentlich dabei ist, dass die Bewegungsrichtung des zweiten Stellmittels 5 bzw. des Stellelements 4 eine ausreichende Normalkomponente zu der einer Verbindungsstrecke von Fix-Lagerpunkt FP und dem ersten Verstell-Lagerpunkt P1 aufweist, um den den optisch relevanten Bauteil 2 tragenden Rahmen 3 mit zur Ausrichtung desselben ausreichendem Drehmoment beaufschlagen zu können. Im Gegensatz zur ersten Variante steht das Stellelement 4 mit einem an einer zweiten Führung 12 bewegbar geführten Übertragungselement UE in Eingriff (in Fig. 5 erkennbar), wobei die zweite Führung 12 mit dem zweiten Stellmittel 5 ortsfest verbunden ist, wobei der optisch relevante Bauteil 2 in einem Rahmen 3 aufgenommen ist, und der optische relevante Bauteil 2 gemeinsam mit dem Rahmen 3 um die erste und die zweite Achse z und y verschwenkbar ist. Die Verbindung des Übertragungselements UE (welches einen ersten und einen zweiten in Fig. 7 dargestellten Öffnungsbereich UE' und UE" aufweist) mit dem Rahmen 3 erfolgt analog zur der Verbindung des Armes AR mit dem Rahmen 3 in der ersten Variante. Das bedeutet, dass der Rahmen 3 ebenso wie in Variante eins einen abstehenden Endbereich mit einem darin aufgenommen Verbindungsstück 7 aufweist, an welchem der Verstell-Lagerpunkt P1 zu liegen kommt. Das Verbindungsstück 7 ist zumindest teilweise innerhalb eines zweiten Öffnungsbereiches UE" von dem Übertragungselement UE umschlossen. Um eine Klemmung des Verbindungsstückes 7 vorzubeugen, ist dieses daher mit einem gewissen Spiel, also einem gewissen Bewegungsfreiraum ausgestattet. Dies wird z.B. dadurch erreicht, dass das Verbindungsstück 7 an dessen dem zweiten Öffnungsbereich UE" zugewandten Ende eine zylindrische Erweiterung aufweist, die entlang deren Längsachse geschlitzt ist und deren Durchmesser die Dicke anderer Bereiche des Verbindungsstückes 7 übertrifft. Nachdem sich bei einem Schwenken des Rahmens 3 um die erste Achse z des Verbindungsstück 7 gemeinsam mit dem Rahmen 3 bewegt, ist das Verbindungsstück 7 so breit ausgeführt (dies betrifft im Wesentlichen die Erstreckung in Richtung der zweiten Achse y), dass auch bei einem Verschwenkvorgang um die erste Achse z zumindest ein Teilbereich des Verbindungsstückes 7 in den zweiten Öffnungsbereich UE" ragt.

Fig. 5 zeigt das Einstellsystem gemäß Fig. 4 in einer perspektivischen Darstellung. Darin sind die zweite Führung 12 und das darin aufgenommene Übertragungselement UE gut erkennbar.

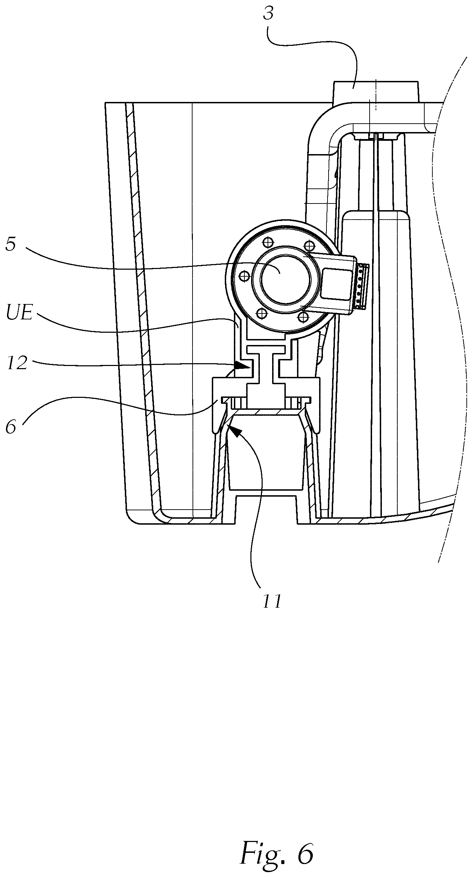

Fig. 6 zeigt eine Schnittansicht der ersten und der zweiten Führung 11 und 12 des Einstellsystems gemäß Fig. 4. Das erste Stellmittel 6 weist zwei gegenüberliegende Haltebereiche auf, die die erste Führung 11 umschließen und das erste Stellmittel 6 an der ersten Führung 11 festklemmen. Die zweite Führung 12 ist an dem ersten Stellmittel 6 angeordnet (welches mit dem zweiten Stellmittel 5 ortsfest verbunden ist), wobei das Übertragungselement UE Haltebereiche aufweist, die die zweite Führung 12 umschließen und das Übertragungselement UE an dem ersten Stellmittel 6 festklemmen.

Fig. 7 zeigt das Einstellsystem gemäß Fig. 4 sowie Fig. 5 in einer Seitenansicht, wobei darin insbesondere die Funktionsweise der zweiten Verstelleinrichtung V2 erkennbar ist. Die Verstelleinrichtungen V2 ist über ein drehbares Justierelement, insbesondere eine Justierschraube einstellbar. Im Gegensatz zur ersten Variante wirkt das Justierelement der zweiten Verstelleinrichtung V2 in der gezeigten Ausführungsform über ein Stirnradgetriebe auf eine korrespondierende Welle, die zumindest an einem Abschnitt ein Gewinde aufweist, entlang dessen sich jeweils ein Schubelement abhängig von der Drehrichtung der Welle translatorisch bewegt. Das Schubelement der zweiten Verstelleinrichtung V2 stellt das erste Stellmittel 6 dar und wirkt auf das zweite Stellmittel 5, indem das zweite Stellmittel 5 mit dem ersten Stellmittel 6 ortsfest verbunden ist und somit der Relativbewegung des ersten Stellmittels 6 in Bezug auf die zu dem Stirnradgetriebe korrespondierende Welle folgt. Das Übertragungselement UE und die erste Führung 11 sind durch Schnittdarstellungen erkennbar. So ist der erste Öffnungsbereich UE' des Übertragungselements UE deutlich erkennbar, in welchen das Stellelement 4 ragt und ein kugelförmiger Endabschnitt des Stellelements 4 festgeklemmt ist. Eine durch das Stellelement 4 erfolgende Stellbewegung kann somit effizient über das Übertragungselement UE auf das Verbindungsstück 7 und somit auf den Rahmen 3 übertragen werden. Für die übrigen Merkmale gilt das in der ersten Variante Gesagte.

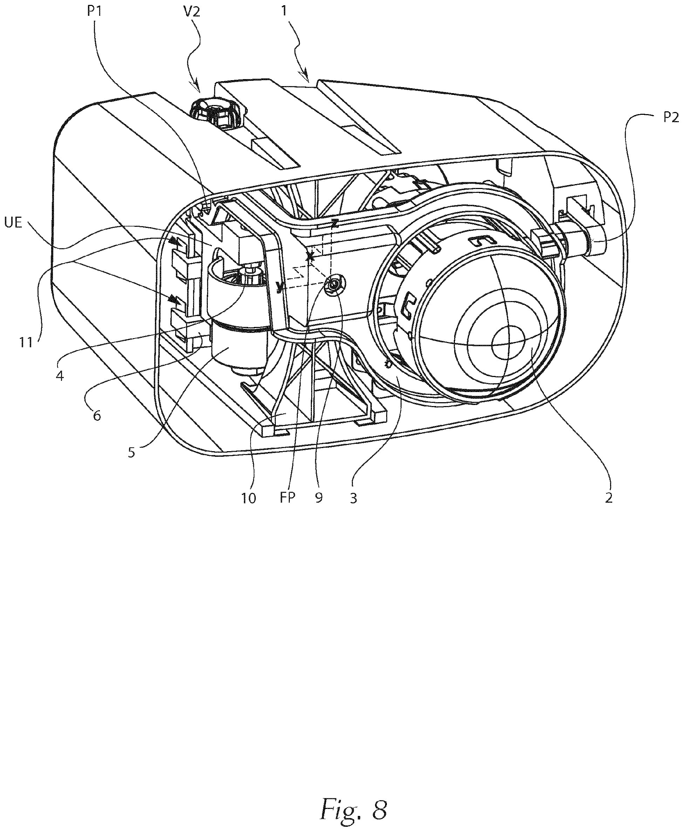

Fig. 8 zeigt ein Scheinwerfergehäuse mit einem Einstellsystem in einer dritten Variante. Diese unterscheidet sich von der zweiten Variante, durch den Aufbau der Strebe 10 und die Anordnung der zweiten Verstelleinrichtung V2 sowie der ersten und zweiten Führung 11 und 12, des ersten Stellmittels 6, des zweiten Stellmittels 5, des Stellelements 4 und des damit verbundenen Übertragungselements UE. So erstreckt sich die Strebe 10 vorzugsweise vertikal von einer Gehäuseoberseite zu einer Gehäuseunterseite eines Scheinwerfergehäuses, wobei der Fix-Lagerpunkt FP in analoger Weise zu den Varianten eins und zwei an der Strebe angeordnet und vorzugsweise durch eine Klemmlager 9 realisiert ist. Durch den Verzicht auf eine Verbindung der Strebe 10 mit der Gehäuserückseite wird der Raum zwischen der Gehäuserückseite und der Strebe 10 nutzbar, wodurch das Einstellsystem besonders kompakt ausgeführt werden kann. So ist die Anordnung aus der zweiten Verstelleinrichtung V2 sowie der ersten und zweiten Führung 11 und 12, des ersten Stellmittels 5, des zweiten Stellmittels 6, des Stellelements 4 und des damit verbundenen Übertragungselements UE im Gegensatz zur zweiten Variante zumindest teilweise hinter die Strebe 10, also in den Bereich zwischen Gehäuserückseite und Strebe 10 gerückt.

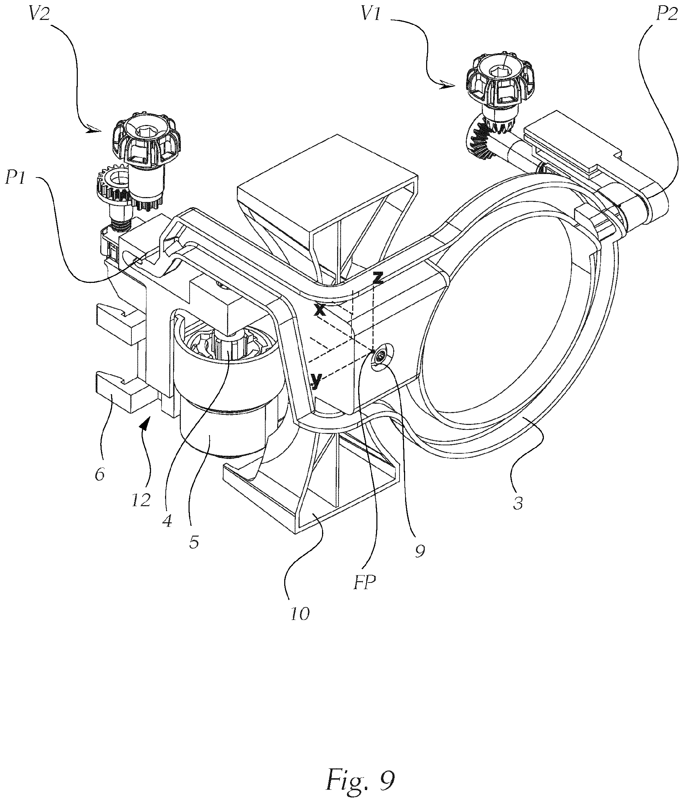

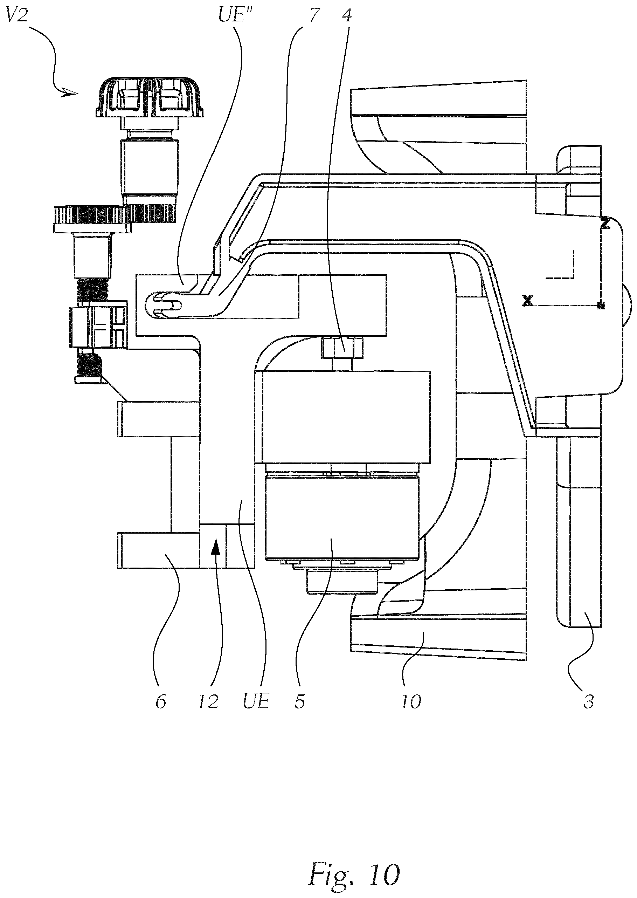

Fig. 9 zeigt eine perspektivische Darstellung dieser dritten Variante in der beispielsweise die zweite Führung 12 analog zu der zweiten Variante ausgeführt und erkennbar ist. Weiters ist in Fig. 10 eine Seitenansicht erkennbar, in der die Funktionsweise des Übertragungselements UE analog zu der zweiten Variante verdeutlicht wird. Im Gegensatz zur zweiten Variante erstreckt sich der zweite Öffnungsbereich UE" entlang der gesamten Abmessung des Übertragungselements UE entlang einer Bewegungsbahn des Verbindungsstückes 7.

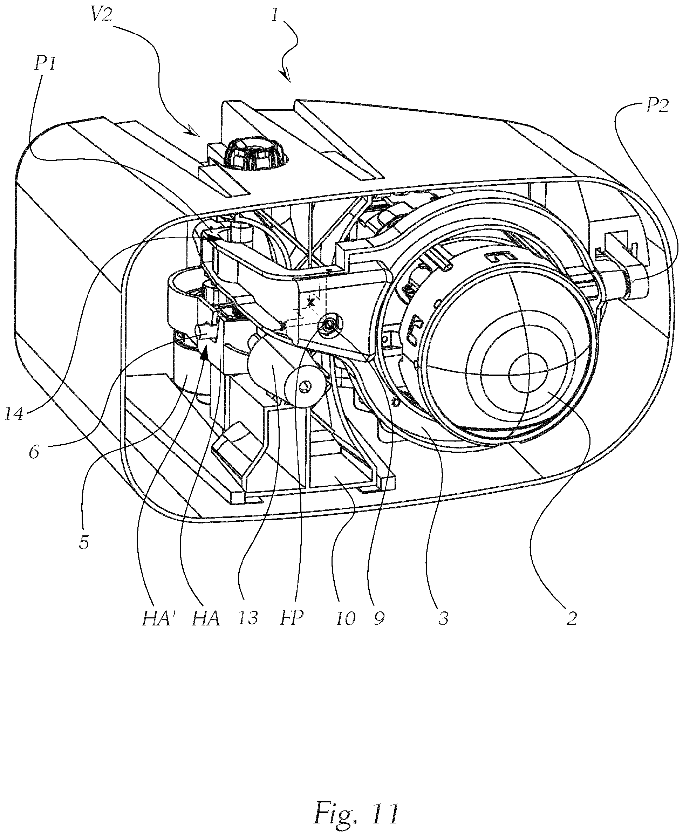

Eine vierte Variante ist in Fig. 11 dargestellt. Analog zu den Varianten eins bis drei ist darin ein optisch relevanter Bauteil 2 in einem Rahmen 3 gehalten, der einen abstehenden Endbereich aufweist. Der Rahmen 3 ist mitsamt dem optisch relevanten Bauteil 2 um eine erste und eine zweite Achse z und y (siehe eingangs durchgeführte Definition der Achsen) schwenkbar gelagert. Hierfür sind ein erster und ein zweiter Verstelllagerpunkt P1 und P2 sowie ein Fix-Lagerpunkt FP vorgesehen, wobei der Fix-Lagerpunkt FP in analoger Weise zu den Varianten eins bis drei an einer Strebe 10 angeordnet und vorzugsweise als Klemmlager 9 realisiert ist, wobei sich die Strebe 10 vorzugsweise vertikal von einer Gehäuseoberseite zu einer Gehäuseunterseite eines Scheinwerfergehäuses erstreckt. Durch den Verzicht auf eine Verbindung der Strebe 10 mit der Gehäuserückseite wird der Raum zwischen der Gehäuserückseite und der Strebe 10 nutzbar, wodurch das Einstellsystem besonders kompakt ausgeführt werden kann.

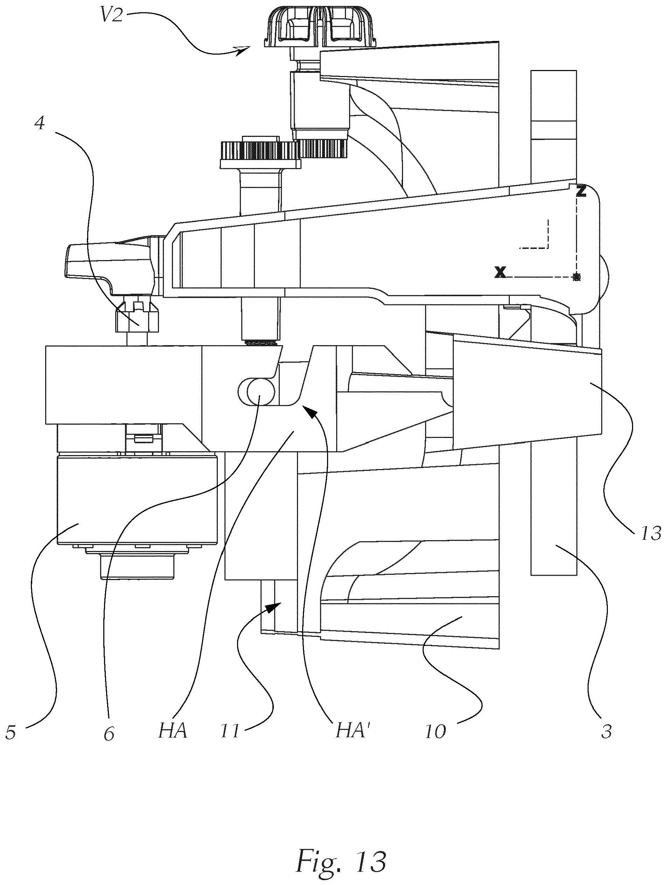

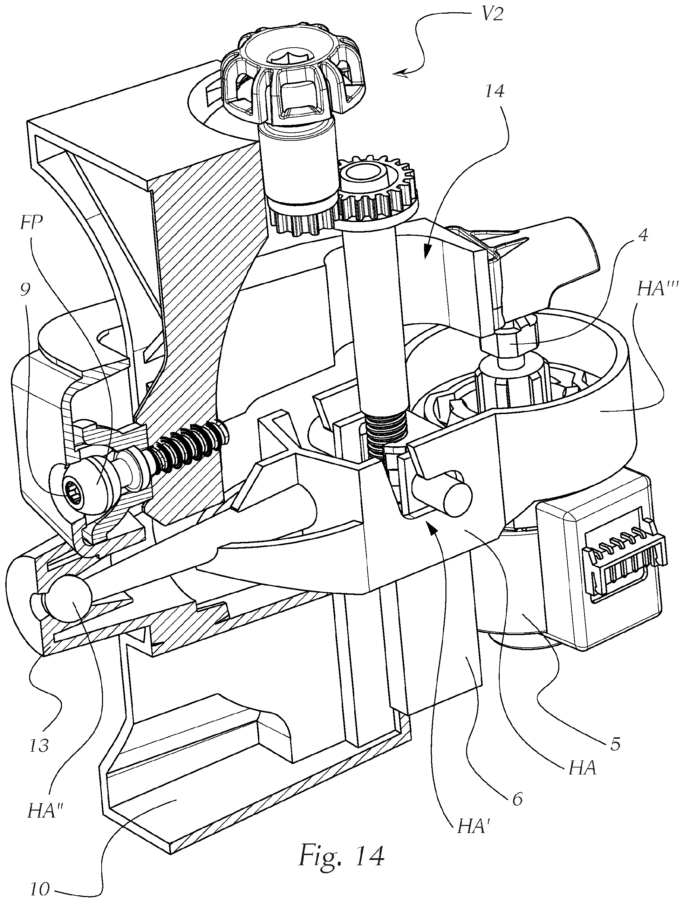

Das Einstellsystem weist eine erste und eine zweite Verstelleinrichtung V1 und V2 auf, wobei die erste Verstelleinrichtung V1 an dem zweiten Verstell-Lagerpunkt P2 angreift, und die zweite Verstelleinrichtung V2 auf den ersten Verstell-Lagerpunkt P1 wirkt. Beide Verstelleinrichtungen V1 und V2 sind dabei über drehbare Justierelemente, insbesondere Justierschrauben einstellbar. So wirkt das Justierelement der ersten Verstelleinrichtung V1 in der gezeigten Ausführungsform über ein Kegelgetriebe auf eine korrespondierende Welle, die zumindest an einem Abschnitt ein Gewinde aufweist, entlang dessen sich jeweils ein Schubelement abhängig von der Drehrichtung der Welle translatorisch bewegt. In der ersten Verstelleinrichtung V1 steht dieses Schubelement in unmittelbaren Eingriff mit dem zweiten Verstell-Lagerpunkt P2, wodurch ein Verschwenken des optisch relevanten Bauteils 2 um die erste Achse z ermöglicht ist. In der zweiten Verstelleinrichtung V2 wird die Drehung des Justierelements über ein Stirnradgetriebe auf eine korrespondierende Welle übertragen, die zumindest an einem Abschnitt ein Gewinde aufweist, entlang dessen sich jeweils ein Schubelement abhängig von der Drehrichtung der Welle translatorisch bewegt. Dieses Schubelement stellt das erste Stellmittel 6 dar, welches erste Stellmittel 6 an einer an der Strebe 10 angeordneten ersten Führung 11 (siehe Fig. 13) geführt und gehalten ist. Das erste Stellmittel 6 greift in einen Öffnungsbereich HA' eines Haltearms HA, wobei der Haltearm HA einen ersten Endabschnitt HA" (siehe Fig. 14) aufweist, der mit einem mit der Strebe 10 fest verbunden Aufhängungselement 13 gelenkig verbunden ist. Der Haltearm HA weist des Weiteren einen Halteabschnitt HA'" (siehe Fig. 14) auf, in welchem das zweite Stellmittel 5 gehalten, insbesondere mit dem Haltearm HA ortsfest verbunden ist. Das zweite Stellmittel 5 verfügt analog zu den Varianten eins bis drei (sowie den weiteren gezeigten Varianten) über einen Elektromotor, der eine Linearbewegung des Stellelements 4 ermöglicht, wobei das Stellelement 4 mit einem abstehenden Endbereich des Rahmens 3 an dem ersten Verstell-Lagerpunkt P1 in Eingriff steht. Eine Linearbewegung des Stellelements 4 führt dabei zu einem Verschwenken des Rahmens 3 und somit des optisch relevanten Bauteils 2 um die zweite Achse y. Bei einer Schwenkbewegung des Rahmens 3 um die erste Achse z wandert der abstehende Endbereich gemeinsam mit dem zweiten Stellmittel 5 und dem diesem zugeordneten Stellelement 4 jeweils entlang einer Schwenkbahn um die gelenkige Verbindung mit dem Aufhängungselement 13. Die Ausführung dieser Verbindung ist in Fig. 14 im Detail dargestellt. Der Fix-Lagerpunkt FP ist analog zu den Varianten eins bis drei an der Strebe 10 angeordnet und vorzugsweise als Klemmlager 9 realisiert. Da die erste Führung 11 ortsfest an der Strebe 10 angebracht oder mit dieser einstückig ausgeführt ist, verfügt das innerhalb des Halteabschnitts HA'" des Haltearms HA angeordnete zweite Stellmittel 5 über einen definierten freien Bewegungsraum in Schwenkrichtung (in Bezug auf das erste Stellmittel 6) um die erste Achse z bzw. um den die gelenkige Verbindung mit dem Aufhängungselement 13, sodass der Haltearm HA der Schwenkbewegung des abstehenden Endbereichs des Rahmens 3 folgen kann. Das erste Stellmittel 6 verfügt dabei in der gezeigten Ausführungsvariante über einen Bolzen, der in eine den Halteabschnitt HA'" bildenden schlitzförmige Öffnungsbahn in eine Einrastposition verschiebbar ist, wobei der Bolzen in der Einrastposition entlang der obig beschriebenen Schwenkbahn verschiebbar und in Richtung der ersten Achse z formschlüssig festgehalten ist. Die Verbindung des abstehenden Endbereichs mit dem restlichen Rahmen 3 weist hierfür eine Ausnehmung 14 auf, die eine die Schwenkbewegung begrenzende Kollision mit der zweiten Verstelleinrichtung V2 vorbeugt (siehe insbesondere Fig. 14).

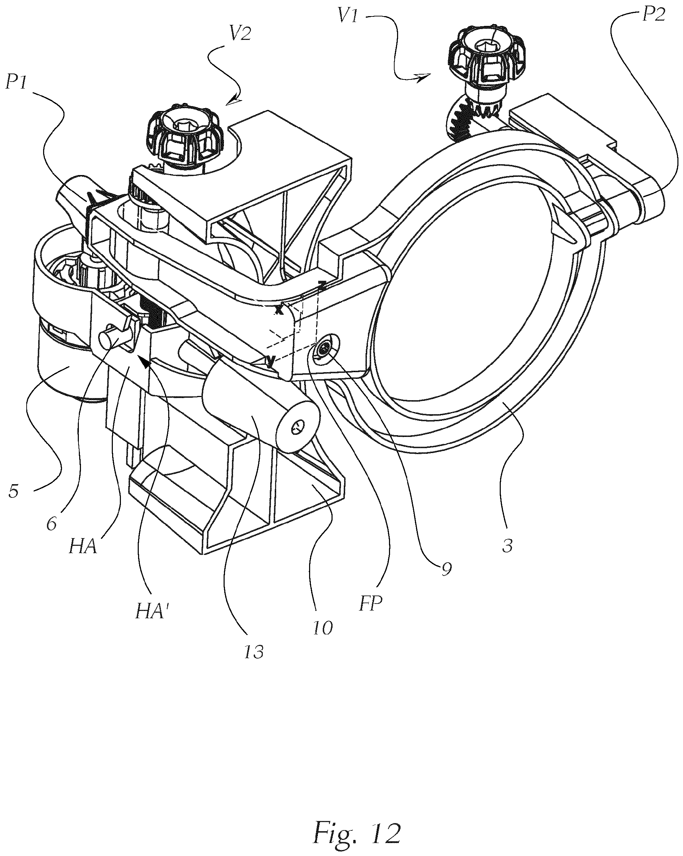

Dieser Aufbau ist in Fig. 12 in einer perspektivischen Darstellung erkennbar, in welcher zusätzlich die erste Verstelleinrichtung V1 angedeutet ist. Fig. 13 zeigt eine Seitenansicht der vierten Variante, wobei darin die erste Führung 11 deutlich erkennbar ist, die sich vorzugsweise in Richtung der ersten Achse z erstreckt.

Fig. 14 zeigt die vierte Variante gemäß Fig. 11 bis 13 in einer perspektivischen Schnittdarstellung. Der erste Endabschnitt HA" des Haltearms HA ist darin kugelförmig ausgebildet und in einer schalenartigen Gelenkpfanne des Aufhängungselements gelenkig aufgenommen. Der Fix-Lagerpunkt FP ist als Klemmlager 9 realisiert, wobei eine Schraube mit kugelförmigem Kopf mit der Strebe 10 verschraubt ist, welcher kugelförmige Kopf in einem schalenartigen Gegenstück des Rahmens 3 gelenkig aufgenommen ist. Das Stellelement 4 ragt in den abstehenden Endbereich des Rahmens 3 und ist dazu eingerichtet, die Linearbewegung des Stellelements 4 auf den Rahmen 3 zu übertragen. Die Verbindung des Stellelements 4 mit dem abstehenden Endbereich des Rahmens 3 kann dabei ebenso durch eine kugelförmige Erweiterung des Stellelements 4, welche in eine die Kugel umschließende Pfanne des abstehenden Endbereichs des Rahmens 3 ragt, gegeben sein.

Durch den Verzicht auf eine an der Gehäuserückseite angeordnete Führung kann das Einstellsystem in einfacher Weise vormontiert und rasch in das Scheinwerfergehäuse eingesetzt werden. Auch die für das Einstellsystem eingesetzten Materialien können in diesem Fall freier gewählt werden, da auf Führungen am Scheinwerfgehäuse verzichtet wird, welches Scheinwerfergehäuse zumeist aus hartem und sprödem Material besteht. Daraus resultiert eine verbesserte Werkstoffpaarung.

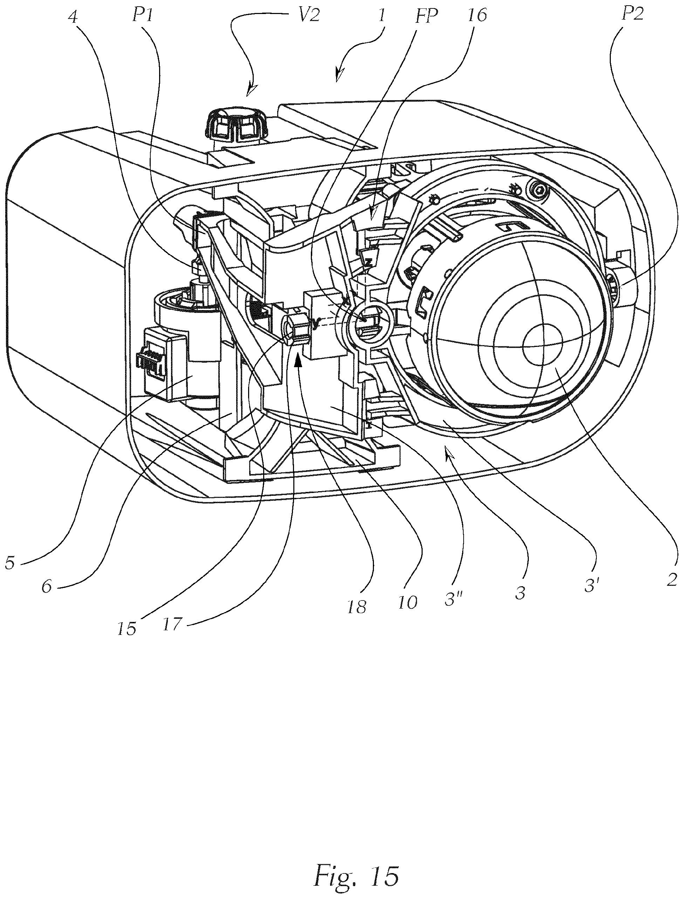

Die Fig. 15 zeigt ein Scheinwerfergehäuse, in welchem eine fünfte Variante des Einstellsystems aufgenommen ist. Der Rahmen 3 ist zweiteilig aufgebaut und besteht aus einem ersten und einen zweiten Rahmenteil 3' und 3", wobei der erste Rahmenteil 3' den optisch relevanten Bauteil 2 trägt und mitsamt diesem um eine erste und eine zweite Achse z und y (siehe eingangs durchgeführte Definition der Achsen) schwenkbar gelagert ist. Hierfür sind ein erster und ein zweiter Verstelllagerpunkt P1 und P2 sowie ein Fix-Lagerpunkt FP vorgesehen, wobei der Fix-Lagerpunkt FP im Gegensatz zu den Varianten eins bis vier zwar an einer Strebe 10 angeordnet aber durch eine Drehwelle 15 und eine dazu vorzugsweise normal orientierte Gelenkanordnung 16 gebildet ist. Die Strebe 10 erstreckt sich vorzugsweise vertikal von einer Gehäuseoberseite zu einer Gehäuseunterseite des Scheinwerfergehäuses. Durch den Verzicht auf eine Verbindung der Strebe 10 mit der Gehäuserückseite wird der Raum zwischen der Gehäuserückseite und der Strebe 10 nutzbar, wodurch das Einstellsystem besonders kompakt ausgeführt werden kann.

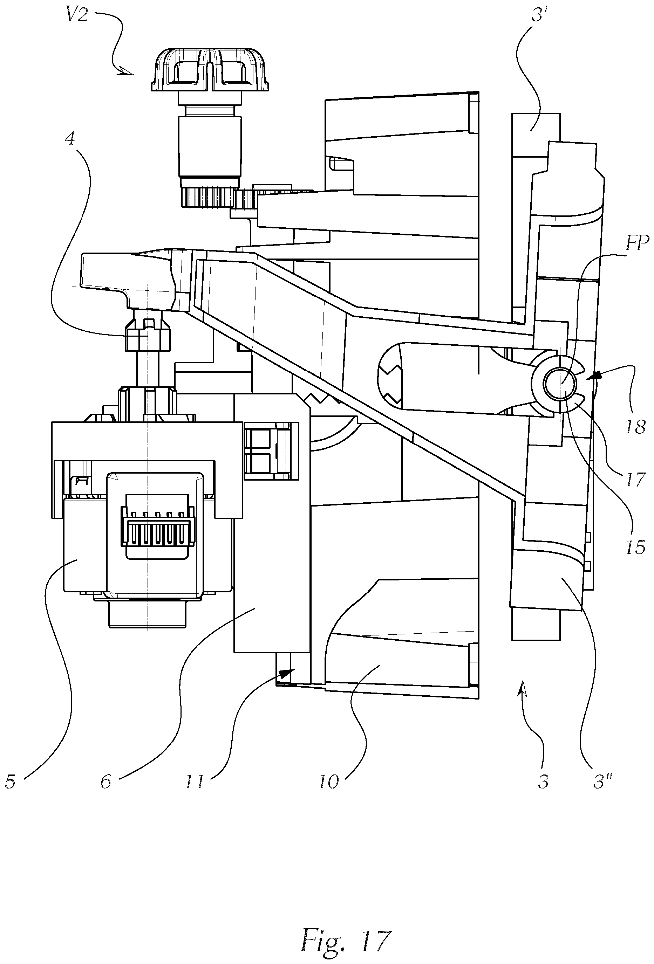

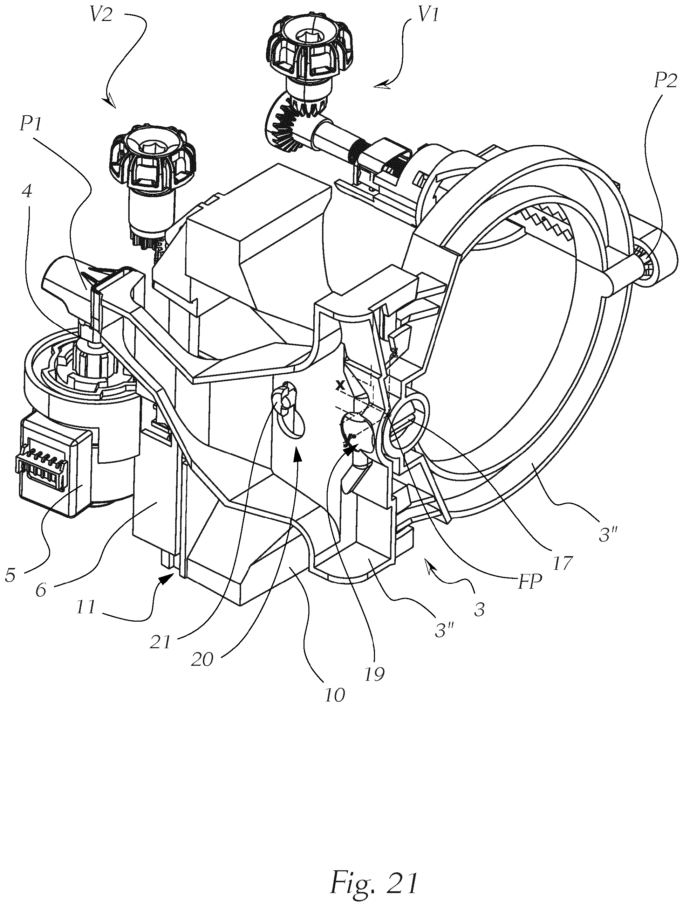

Das Einstellsystem weist eine erste und eine zweite Verstelleinrichtung V1 und V2 auf, wobei die erste Verstelleinrichtung V1 an dem zweiten Verstell-Lagerpunkt P2 angreift, und die zweite Verstelleinrichtung V2 auf den ersten Verstell-Lagerpunkt P1 wirkt. Beide Verstelleinrichtungen V1 und V2 sind dabei über drehbare Justierelemente, insbesondere Justierschrauben einstellbar. So wirkt das Justierelement der ersten Verstelleinrichtung V1 in der gezeigten Ausführungsform über ein Kegelgetriebe (siehe Fig. 17 bzw. analog zu Fig. 21) auf eine korrespondierende Welle, die zumindest an einem Abschnitt ein Gewinde aufweist, entlang dessen sich jeweils ein Schubelement abhängig von der Drehrichtung der Welle translatorisch (vorzugsweise ausschließlich parallel zu der dritten Achse x, dies gilt für sämtliche angeführte Varianten der Erfindung) bewegt. In der ersten Verstelleinrichtung V1 steht dieses Schubelement in unmittelbaren Eingriff mit dem zweiten Verstell-Lagerpunkt P2, wodurch ein Verschwenken des optisch relevanten Bauteils 2 um die erste Achse z ermöglicht ist.

In der zweiten Verstelleinrichtung V2 wird die Drehung des Justierelements über ein Stirnradgetriebe auf eine korrespondierende Welle übertragen, die zumindest an einem Abschnitt ein Gewinde aufweist, entlang dessen sich jeweils ein Schubelement abhängig von der Drehrichtung translatorisch (vorzugsweise ausschließlich parallel zur ersten Achse z) bewegt. Dieses Schubelement stellt das erste Stellmittel 6 dar, welches erste Stellmittel 6 an einer an der Strebe 10 angeordneten ersten Führung 11 geführt und gehalten ist, wie insbesondere in Fig. 17 erkennbar ist.

Das zweite Stellmittel 5 ist mit dem ersten Stellmittel 6 ortsfest verbunden, indem das zweite Stellmittel 5 beispielsweise mit einem Haltebereich des ersten Stellmittels 6 verschraubt oder in diesen festgeklemmt ist. Das zweite Stellmittel 5 verfügt über einen Elektromotor, der eine Linearbewegung des Stellelements 4 ermöglicht. Nachdem der Stellbereich des zweiten Stellmittels 5 die möglichen Relativpositionen des Stellelements 4 in Bezug auf zweite Stellmittel 5 festlegt, ist eine Absolutverstellung des zweiten Stellmittels 5 durch das erste Stellmittel 6 für den Stellbereich des zweiten Stellmittels 5 ohne Bedeutung. Durch die zweite Verstelleinrichtung V2 kann daher der Position des optisch relevanten Bauteils 2 in einfacher Weise eine Art "offset" hinzugefügt werden. Dabei ist es besonders vorteilhaft, dass in der gezeigten Ausführungsform die Verstellrichtung des zweiten Stellmittels 4 bzw. des Stellelements 4 mit der Verstellrichtung des ersten Stellmittels 6 bzw. des Schubelements, also der Schubrichtung, übereinstimmt.

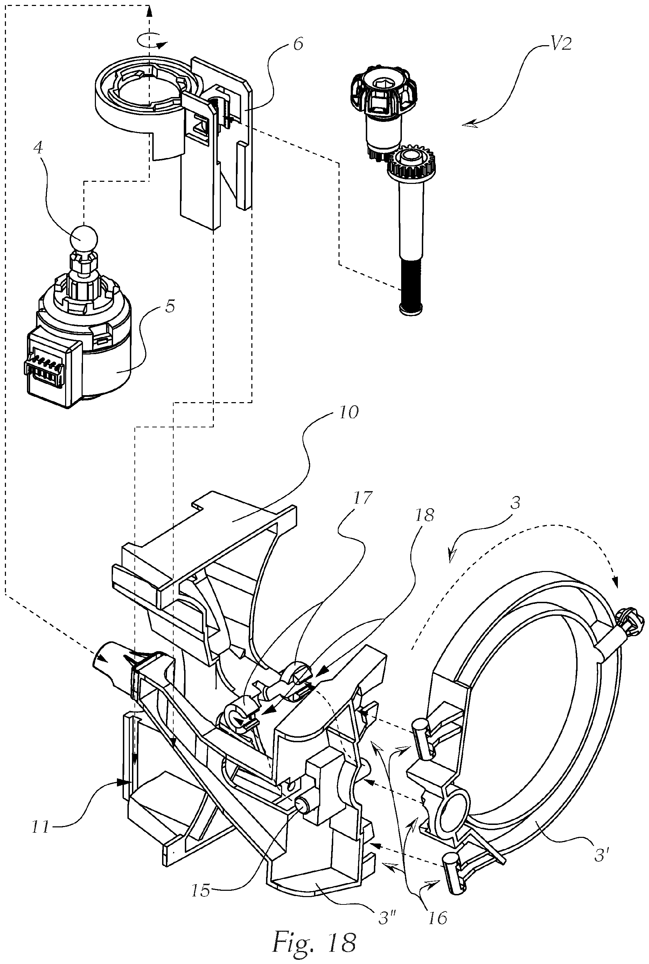

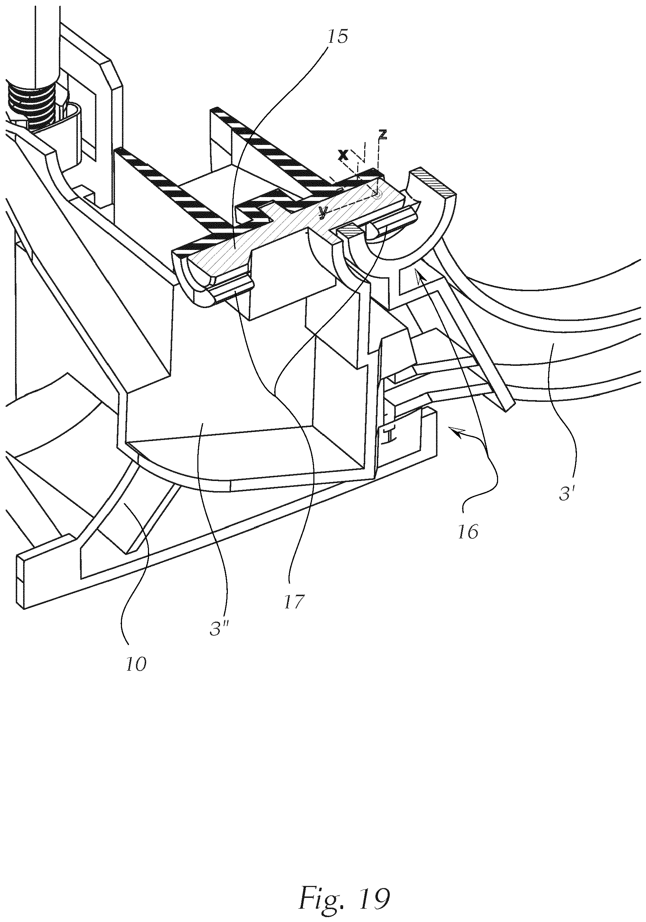

Das Stellelement 4 steht mit einem abstehenden Endbereich des Rahmens 3, der an dem zweiten Rahmenteil 3" angeordnet ist, an dem ersten Verstell-Lagerpunkt P1 in Eingriff. Eine Linearbewegung des Stellelements 4 führt dabei zu einem Verschwenken des gesamten Rahmens 3 und somit des optisch relevanten Bauteils 2 um die zweite Achse y. Dabei dreht sich der Rahmen 3 bestehend aus den beiden Rahmenteilen 3' und 3" gemeinsam mit der Drehwelle 15, die fest mit dem zweiten Rahmenteil 3" verbunden, insbesondere einstückig ausgeführt ist und in einer an der Strebe 10 angeordneten Drehwellenaufnahme 17 festgehalten ist. Die Drehwellenaufnahme 17 ist schalenartig ausgeführt, wobei in der gezeigten Ausführungsform zwei zueinander in Richtung der zweiten Achse y beabstandete Schalen im Wesentlichen analog zu Mantelflächen eines Zylinders geformt sind, wobei diese Schalen eine in Richtung der zweiten Achse y erstreckende schlitzartige Öffnung 18 aufweisen, die an der in Fahrtrichtung (also entgegen der positiven Zählrichtung der dritten Achse x) gelegenen Seite der Schalen liegt. Diese schlitzartige Öffnung 18 ist dergestalt ausgeführt, dass die Drehwelle 15 unter Krafteinwirkung von vorne, also entgegen der Fahrtrichtung, in die Drehwellenaufnahme 17 gedrückt werden kann (siehe insbesondere Fig. 18 und Fig. 19). Die Schalen sind dabei beispielsweise elastisch ausgeführt, sodass sich die schlitzartige Öffnung 18 unter beim Einsetzen der Drehwelle 15 auftretender mechanischer Belastung (entsprechend einem belastenden Zustand) bis hin zum Drehwellendurchmesser erweitert. Die Drehwelle 15 kann somit in die Drehwellenaufnahme 17 gleiten. Sobald die Drehwelle 15 vollständig in der Drehwellenaufnahme 17 aufgenommen ist, verringert sich die Abmessung schlitzartige Öffnung 18 wieder hin zu einem unbelasteten Zustand, in welchem der Durchmesser der Drehwelle 15 größer ist als eine zur Drehwellenentnahme notwendige Öffnungsgröße der schlitzartigen Öffnung 18. Der zweite Rahmenteil 3" kann somit besonders einfach an der Strebe 10 montiert werden, indem die Drehwelle 15 einfach in die Drehwellenaufnahme 17 gepresst wird, wodurch eine einfache und kostengünstige Lagerung des zweiten Rahmenteils 3" realisiert ist.

Der erste Rahmenteil 3' ist mit dem zweiten Rahmenteil 3" über eine Gelenkanordnung 16 verbunden. Die Gelenkanordnung 16 besteht dabei in der gezeigten Ausführungsform aus zwei zueinander beabstandeten Armen mit zylindrischen drehwellenartigen Endabschnitten, die in korrespondierende, an dem zweiten Rahmenteil 3" angeordnete Aufnahmen einsetzbar sind, wobei die Aufnahmen die zylindrischen drehwellenartigen Endabschnitte zumindest teilweise umschließen, diese in deren Position festhalten, und gleichzeitig eine Drehung des ersten Rahmenteils 3' um die erste Achse z ermöglichen. Hierfür sind die zylindrischen drehwellenartigen Endabschnitte koaxial ausgerichtet, wobei deren Achsen mit der ersten Achse z übereinstimmen. Wie insbesondere in Fig. 19 erkennbar ist, ist zwischen den zylindrischen drehwellenartigen Endabschnitten ein im ersten Rahmenteil 3' aufgenommener Ring angeordnet, der in die Drehwellenaufnahme 17 eingreift und den ersten Rahmenteil 3' zusätzlich in Richtung der zweiten Achse y stabilisiert.

Generell sind beliebige Gelenkanordnungen 16 denkbar, die ein Schwenken des ersten Rahmenteils 3' um eine erste Achse z und um den zweiten Rahmenteil 3" ermöglicht.

In der gezeigten Ausführungsform liegt der gemeinsame Schwerpunkt des Rahmens 3 und des optisch relevanten Bauteils 2 auf der zweiten Achse y, sodass der zur Durchführung einer Schwenkbewegung notwendige Kraft- bzw. Drehmomentaufwand minimal ist und die Rüttelfestigkeit des Einstellsystems steigt. Alternativ dazu kann der Schwerpunkt aber ebenso je nach Beschaffenheit des optisch relevanten Bauteils 2 von der zweiten Achse y abweichen. Durch den Verzicht auf eine an der Gehäuserückseite angeordnete Führung kann das Einstellsystem in einfacher Weise vormontiert und rasch in das Scheinwerfergehäuse eingesetzt werden. Auch die für das Einstellsystem eingesetzten Materialien können in diesem Fall freier gewählt werden, da auf Führungen am Scheinwerfgehäuse verzichtet wird, welches Scheinwerfergehäuse zumeist aus hartem und sprödem Material besteht. Daraus resultiert eine verbesserte Werkstoffpaarung.

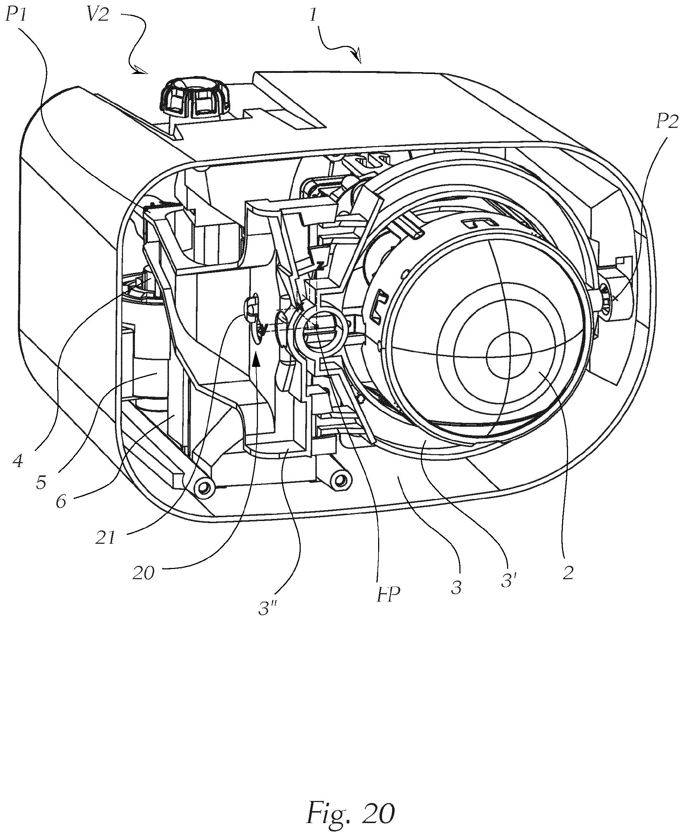

Fig. 20 zeigt eine sechste Variante die sich von der fünften Variante durch folgend beschriebene Merkmale unterscheidet. Die Drehwellenaufnahme 17 weist im Gegensatz zur Variante fünf keine erweiterbare schlitzartige Öffnung 18 auf. Das Einsetzen der Drehwelle 15 erfolgt hierbei durch Einschieben in die Drehwellenaufnahme 17 in Richtung der zweiten Achse y. Die Drehwellenaufnahme 17 weist dabei eine zylindrische Öffnung 19 auf, die analog zu einer Deckfläche eines Zylinders, dessen Achse parallel zur zweiten Achse y ausgerichtet ist, orientiert ist. Die an dem zweiten Rahmenteil 3" angeordnete Drehwelle 15 kann folglich nicht in Richtung der dritten Achse x verschoben bzw. entnommen werden, womit diese sechste Variante besonders hohen Rüttelbelastungen standhält. Um einem Herausrutschen der Drehwelle 15 aus der Drehwellenaufnahme 17 in Richtung der zweiten Achse y entgegen zu wirken, ist in dem zweiten Rahmenteil 3" eine Halteöffnung 20 vorgesehen, welche Halteöffnung 20 dazu eingerichtet ist, ein korrespondierendes an der Strebe 10 angeordnetes Halteelement 21 aufzunehmen. Hierfür ist Halteöffnung 20 kreisförmig ausgebildet, wobei die kreisförmige Halteöffnung 20 in einem Haltebereich schlitzartig erweitert ist. Das Halteelement 21 weist in einem Endbereich einen Haltekopf auf, welcher Haltekopf vor dem Einsetzvorgang in die Halteöffnung 20 der Halteöffnung 20 zugewandt ist, und dessen Durchmesser jenen des restlichen Halteelements 21 übersteigt. Der Durchmesser des Haltekopfes ist kleiner als jener Kreisdurchmesser der Halteöffnung 20, sodass der Haltekopf durch die Halteöffnung 20 bringbar ist. Ein Fixieren des zweiten Rahmenteils 3" in Richtung der zweiten Achse y wird erreicht, indem das Halteelement 21 nach Einführen des Haltekopfes in die Halteöffnung 20 in die schlitzartige Erweiterung verschoben wird, wobei der Durchmesser des Haltekopfes jenen der schlitzartigen Erweiterung übersteigt. Die schlitzartige Erweiterung ist dabei so ausgerichtet, dass eine Schwenkbewegung des zweiten Rahmenteils 3" und somit der Halteöffnung 20 um die zweite Achse y nicht behindert wird.

Anders gesagt, wird durch die Anordnung der Bauteile (erster Rahmenteil 3' und Verstelleinrichtung V2) die Hauptbelastung über die Strebe 10 auf ein die Strebe 10 haltendes Gehäuse übertragen. Das Halteelement 21 dient nur zur Sicherung des zweiten Rahmenteils 3" gegen Herausrutschen und ist vernachlässigbaren Belastungen ausgesetzt.

Generell sind beliebe dem Fachmann bekannte Anordnungen geeignet, die die Schwenkbewegung des zweiten Rahmenteils 3" nicht behindern und eine Fixierung in Richtung der zweiten Achse y ermöglichen.

## Patentansprüche

1. Einstellsystem für einen Fahrzeug-Scheinwerfer zum Einstellen eines optisch relevanten Bauteiles (2) des Fahrzeug-Scheinwerfers, bei welchem Einstellsystem der optisch relevante Bauteil (2) an
a) einem Fix-Lagerpunkt (FP) um eine erste und eine zweite Achse (z und y), vorzugsweise eine vertikale und eine horizontale Achse verschwenkbar ist, wobei die erste und die zweite Achse (y) normal zueinander stehen,
b) das Einstellsystem eine erste Verstelleinrichtung (V1) umfasst, mittels welcher der optisch relevante Bauteil um die erste Achse (z) verschwenkbar ist, wobei die erste Verstelleinrichtung (V1) an einem zweiten Verstell-Lagerpunkt (P2) angreift, und wobei
c) das Einstellsystem eine zweite Verstelleinrichtung (V2) umfasst, mittels welcher der optisch relevante Bauteil (2) um die zweite Achse (y) verschwenkbar ist, wobei die zweite Verstelleinrichtung (V2) an einem ersten Verstell-Lagerpunkt (P1) angreift, und wobei
der Fix-Lagerpunkt (FP) und der zweite Verstell-Lagerpunkt (P2) die zweite Achse (y) bilden,
wobei das von den drei Lagerpunkten (FP, P1, P2) gebildete Dreieck im eingebauten Zustand des Scheinwerfers im Wesentlichen in einer horizontalen Ebene liegt, wobei die zweite Verstelleinrichtung (V2) ein manuell bedienbares erstes Stellmittel (6) umfasst und ein elektromotorisches zweites Stellmittel (5) vorgesehen ist, wobei das elektromotorische zweite Stellmittel (5) mit dem optisch relevanten Bauteil (2) zum Verschwenken um die zweite Achse (y) in Eingriff steht, **dadurch gekennzeichnet, dass**
ein dem zweiten Stellmittel (6) zugeordnetes und durch dieses translatorisch in eine Stellrichtung bewegbares Stellelement (4) vorgesehen ist, wobei das Stellelement (4) mit einem um einen dritten Punkt (P3) schwenkbaren Arm (AR) an einem ersten Armabschnitt (AR') in Eingriff steht und ein zweiter Armabschnitt (AR") des Armes (AR) mit dem optisch relevanten Bauteil (2) oder mit einem den optisch relevanten Bauteil (2) tragenden Rahmen (3) zum Verschwenken um die zweite Achse (y) in Eingriff steht.

2. Einstellsystem nach Anspruch 1, **dadurch gekennzeichnet, dass** eine Stellrichtung des ersten Stellmittels (6) mit einer Stellrichtung des zweiten Stellmittels (5) im Wesentlichen übereinstimmt.

3. Einstellsystem nach Anspruch 1 oder 2, **dadurch gekennzeichnet, dass** der Fix-Lagerpunkt (FP) an einer von einer Gehäuserückseite eines Scheinwerfergehäuses abstehenden Strebe (10) vorgesehen ist.

4. Einstellsystem nach Anspruch 3, **dadurch gekennzeichnet, dass** der Arm (AR) L-förmig ausgebildet ist, und der erste und der zweite Armabschnitt (A' und A") sich innerhalb gegenüberliegender Endbereiche des Armes (AR) befinden.

5. Einstellsystem nach Anspruch 1 oder 2, **dadurch gekennzeichnet, dass** der Fix-Lagerpunkt (FP) an einer von einer Gehäuseoberseite Scheinwerfergehäuses zu einer Gehäuseunterseite des Scheinwerfergehäuses erstreckenden Strebe (10) vorgesehen ist.

6. Einstellsystem nach einem der Ansprüche 1 bis 5, **dadurch gekennzeichnet, dass** das zweite Stellmittel (5) zur Einstellung durch das erste Stellmittel (6) bewegbar an einer an einer Gehäuserückseite befindlichen ersten Führung (11) angebracht ist.

7. Einstellsystem nach Anspruch 6, **dadurch gekennzeichnet, dass** ein dem zweiten Stellmittel (5) zugeordnetes und durch dieses translatorisch in eine Stellrichtung bewegbares Stellelement (4) vorgesehen ist, wobei das Stellelement (4) mit einem an einer zweiten Führung (12) bewegbar geführten Übertragungselement (UE) in Eingriff steht, wobei die zweite Führung (12) mit dem zweiten Stellmittel (5) ortsfest verbunden ist, wobei der optisch relevante Bauteil (2) in einem Rahmen (3) aufgenommen ist, und der optische relevante Bauteil (2) gemeinsam mit dem Rahmen (3) um die erste und die zweite Achse (y) verschwenkbar ist, wobei ein von dem Rahmen (3) abstehender Endbereich ein Verbindungsstück (7) aufweist, welches zumindest teilweise in einem zweiten Öffnungsbereich (UE") des Übertragungselements (UE) aufgenommen ist.

8. Einstellsystem nach einem der Ansprüche 1 bis 7, **dadurch gekennzeichnet, dass** zum Schwenken um die erste und zweite Achse (z und y) an dem Fix-Lagerpunkt (FP) eine zweiteiligen Klemmlagerschale (9) vorgesehen ist.

9. Fahrzeugscheinwerfer mit zumindest einem optisch relevanten Bauteil (2) sowie mit zumindest einem Einstellsystem nach einem der Ansprüche 1 bis 8 zum Einstellen des zumindest einen optisch relevanten Bauteils (2).

## Claims

1. An adjustment system for a vehicle headlamp for adjusting an optically relevant component (2) of the vehicle headlamp, in which adjustment system the optically relevant component (2)
a) is pivotable at a fixed bearing point (FP) about a first and a second axis (z and y), preferably a vertical and a horizontal axis, wherein the first and the second axis (y) are normal to one another,
b) the adjustment system comprises a first adjustment device (V1), by means of which the optically relevant component can be pivoted about the first axis (z), wherein the first adjustment device (V1) acts on a second adjustment bearing point (P2), and wherein
c) the adjustment system comprises a second adjustment device (V2), by means of which the optically relevant component (2) can be pivoted about the second axis (y), wherein the second adjustment device (V2) acts on a first adjustment bearing point (P1), and wherein
the fixed bearing point (FP) and the second adjustment bearing point (P2) form the second axis (y),
wherein the triangle formed by the three bearing points (FP, P1, P2) in the installed state of the headlamp lies substantially in a horizontal plane, wherein the second adjustment device (V2) comprises a manually operable first adjustment means (6) and an electromotive second adjustment means (5) is provided, wherein the electromotive second adjustment means (5) is in engagement with the optically relevant component (2) for pivoting about the second axis (y), **characterized in that**
an adjustment element (4), assigned to the second adjustment means (6) and translationally movable in an adjustment direction by means of the same, is provided, wherein the adjustment element (4) is in engagement with an arm (AR), which can be pivoted about a third point (P3), at a first arm section (AR') and a second arm section (AR") of the arm (AR) is in engagement with the optically relevant component (2) or with a frame (3) carrying the optically relevant component (2), for pivoting about the second axis (y).

2. The adjustment system according to Claim 1, **characterized in that** an adjustment direction of the first adjustment means (6) substantially matches an adjustment direction of the second adjustment means (5) .

3. The adjustment system according to Claim 1 or 2, **characterized in that** the fixed bearing point (FP) is provided on a strut (10) protruding from a housing rear side of a headlamp housing.

4. The adjustment system according to Claim 3, **characterized in that** the arm (AR) is constructed in an L-shaped manner and the first and the second arm section (A' and A") are located inside opposite end regions of the arm (AR).

5. The adjustment system according to Claim 1 or 2, **characterized in that** the fixed bearing point (FP) is provided on a strut (10) extending from a housing upper side of the headlamp housing to a housing underside of the headlamp housing.

6. The adjustment system according to one of Claims 1 to 5, **characterized in that** the second adjustment means (5) is attached on a first guide (11) located in a movable manner on a first guide located on a housing rear side for adjustment by means of the first adjustment means (6).

7. The adjustment system according to Claim 6, **characterized in that** an adjustment element (4) is provided, which is assigned to the second adjustment means (5) and can be moved by the same translationally in an adjustment direction, wherein the adjustment element (4) is in engagement with a transfer element (UE) guided in a movable manner on a second guide (12), wherein the second guide (12) is connected in a fixed manner to the second adjustment means (5), wherein the optically relevant component (2) is accommodated in a frame (3), and the optically relevant component (2) together with the frame (3) can be pivoted about the first and the second axis (y), wherein an end region protruding from the frame (3) has a connecting piece (7), which is accommodated at least to some extent in a second opening region (UE") of the transfer element (UE).

8. The adjustment system according to one of Claims 1 to 7, **characterized in that** a two-part clamping bearing shell (9) is provided on the fixed bearing point (FP) for pivoting about the first and second axis (z and y).

9. A vehicle headlamp having at least one optically relevant component (2) and having at least one adjustment system according to one of Claims 1 to 8, for adjusting the at least one optically relevant component (2).

## Revendications

1. Système de réglage pour un phare de véhicule pour le réglage d'un élément optiquement pertinent (2) du phare de véhicule, ledit système de réglage permettant de faire pivoter l'élément optiquement pertinent (2)
a) sur un point d'appui fixe (FP) autour d'un premier et d'un second axe (z et y), de préférence un axe vertical et un axe horizontal, le premier et le second axe (y) étant perpendiculaires l'un à l'autre ;
b) le système de réglage comporte un premier dispositif de réglage (V1) au moyen duquel l'élément optiquement pertinent est apte à pivoter autour du premier axe (z), le premier dispositif de réglage (V1) s'engageant avec un second point d'appui de réglage (P2) ; et
c) le système de réglage comporte un second dispositif de réglage (V2) au moyen duquel l'élément optiquement pertinent (2) est apte à pivoter autour du second axe (y), le second dispositif de réglage (V2) s'engageant avec un premier point d'appui de réglage (P1); et
le point d'appui fixe (FP) et le second point d'appui de réglage (p2) formant le second axe (y),
le triangle formé par les trois points d'appui (FP, p1, p2) à l'état monté du phare se situant sensiblement dans un plan horizontal, le second dispositif de réglage (V2) comportant un premier moyen de réglage (6) actionnable manuellement et un second moyen de réglage (5) par un moteur électrique est prévu, le second moyen de réglage (5) par un moteur électrique venant en prise avec l'élément optiquement pertinent (2) pour le pivotement autour du second axe (y), **caractérisé par le fait que**
un élément de réglage (4) associé au second moyen de réglage (6) et déplaçable en translation par celui-ci dans une direction de réglage est prévu, l'élément de réglage (4) venant en prise sur une première partie de bras (AR') avec un bras (AR) apte à pivoter autour d'un troisième point (P3) et une seconde partie de bras (AR") du bras (AR) venant en prise avec l'élément optiquement pertinent (2) ou avec un cadre (3) portant l'élément optiquement pertinent (2) pour le pivotement autour du second axe (y).

2. Système de réglage selon la revendication 1, **caractérisé par le fait qu'**une direction de réglage du premier moyen de réglage (6) correspond sensiblement avec une direction de réglage du second moyen de réglage (5).

3. Système de réglage selon l'une des revendications 1 ou 2, **caractérisé par le fait que** le point d'appui fixe (FP) est prévu sur un support (10) faisant saillie d'un côté arrière de boîtier d'un boîtier de phare.

4. Système de réglage selon la revendication 3, **caractérisé par le fait que** le bras (AR) est réalisé en forme de L, et la première et la seconde partie de bras (A' et A") se trouvent à l'intérieur de zones d'extrémité opposées du bras (AR).

5. Système de réglage selon l'une des revendications 1 ou 2, **caractérisé par le fait que** le point d'appui fixe (FP) est prévu sur un support (10) s'étendant d'un côté supérieur de boîtier du boîtier de phare à un côté inférieur de boîtier du boîtier de phare.

6. Système de réglage selon l'une des revendications 1 à 5, **caractérisé par le fait que** le second moyen de réglage (5) est monté pour le réglage sur un premier guide (11) se trouvant sur un côté arrière de boîtier, déplaçable par le premier moyen de réglage (6).

7. Système de réglage selon la revendication 6, **caractérisé par le fait qu'**un élément de réglage (4) associé au second moyen de réglage (5) et déplaçable en translation par celui-ci dans une direction de réglage est prévu, l'élément de réglage (4) venant en prise avec un élément de transfert (UE) guidé déplaçable sur un second guide (12), le second guide (12) étant relié de manière fixe au second moyen de réglage (5), l'élément optiquement pertinent (2) étant reçu dans un cadre (3), et l'élément optiquement pertinent (2) étant apte à pivoter conjointement avec le cadre (3) autour du premier et du second axe (y), une zone d'extrémité faisant saillie du cadre (3) présentant une pièce de liaison (7), laquelle est reçue au moins partiellement dans une seconde zone d'ouverture (UE") de l'élément de transfert (UE).

8. Système de réglage selon l'une des revendications 1 à 7, **caractérisé par le fait qu'**une coque de palier de serrage (9) en deux parties est prévue sur le point d'appui fixe (FP) pour le pivotement autour des premier et second axes (z et y).

9. Phare de véhicule comportant au moins un élément optiquement pertinent (2) ainsi qu'au moins un système de réglage selon l'une des revendications 1 à 8 pour le réglage dudit au moins un élément optiquement pertinent (2).
